# EUROPEAN PATENT APPLICATION

(11) **EP 4 653 980 A1**
(43) Date of publication of application: **26.11.2025**
(21) Application number: 23921508.0
(22) Date of filing: 28.12.2023
(51) Int. Cl.: G06F 1/16, H04R 1/28, H04R 9/02

(54) **ELECTRONIC DEVICE COMPRISING SPEAKER MODULE**

(30) Priority: 07.02.2023 KR 20230016132; 08.03.2023 KR 20230030728
(71) Applicant: Samsung Electronics Co., Ltd., Suwon-si, Gyeonggi-do 16677 (KR)
(72) Inventor: SIM, Myoungsung, Suwon-si, Gyeonggi-do 16677 (KR); CHO, Joonrae, Suwon-si, Gyeonggi-do 16677 (KR); CHO, Woojin, Suwon-si, Gyeonggi-do 16677 (KR); KIM, Kiwon, Suwon-si, Gyeonggi-do 16677 (KR); KIM, Donghyun, Suwon-si, Gyeonggi-do 16677 (KR); PARK, Youngbae, Suwon-si, Gyeonggi-do 16677 (KR); PARK, Choonghyo, Suwon-si, Gyeonggi-do 16677 (KR); LEE, Byounghee, Suwon-si, Gyeonggi-do 16677 (KR); LEE, Dongyoung, Suwon-si, Gyeonggi-do 16677 (KR)
(74) Representative: HGF
(86) International application number: PCT/KR2023/021955
(87) International publication number: WO 2024/167137

(57) **Abstract**

An electronic device according to an embodiment comprises: a housing including a support including a through hole; a display; a speaker module which includes a speaker and an enclosure surrounding the speaker, and is located below the support; a shield can located below the support and spaced apart from the speaker module and covering electronic components disposed on a printed circuit board; and a connection structure located below the through hole so as to connect a first space between the speaker and the enclosure, to a second space between the printed circuit board and the shield can.

## Description

### [Technical Field]

The present disclosure relates to an electronic device including a speaker module.

### [Background Art]

An electronic device may include a speaker for providing an audio signal. The audio signal outputted from the speaker may be transmitted from the inside of the housing to the outside. The audio signal may cause a resonance phenomenon that vibrates with a large amplitude at a specific frequency. Audio frequency bands of the audio signal may be distinguished according to the frequency. An audio signal in a low audio frequency band having a relatively low frequency may have a relatively long wavelength, and therefore, may require a relatively large space to generate a resonance phenomenon.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may include a housing, a display, a speaker module, a shield can, and a connecting structure. The housing may include a support. The support may include a through hole. The display may be positioned in a first direction with respect to the support. The speaker module may include a speaker and an enclosure. The speaker may be configured to output an audio signal. The enclosure may surround the speaker. The speaker module may be positioned in a second direction opposite to the first direction with respect to the support. The shield can may be spaced apart from the speaker module in the second direction with respect to the support. The shield can may cover electronic components disposed on a printed circuit board (PCB). The connecting structure may be positioned in the second direction with respect to the through hole, to connect a first space between the speaker and the enclosure and a second space between the PCB and the shield can via the through hole, for resonance of the audio signal. The connecting structure may be in contact with a first side of the enclosure that at least partially surrounds the first space and a second side of the shield can that at least partially surrounds the second space, respectively.

According to an embodiment, an electronic device may include a housing, a speaker module, a shield can, and a connecting structure. The housing may include a support. The support may include a through hole. The speaker module may include a speaker and an enclosure. The speaker may be configured to output an audio signal. The enclosure may surround the speaker. The speaker module may be positioned in a first direction with respect to the support. The shield can may be spaced apart from the speaker module in the first direction with respect to the support. The shield can may cover electronic components disposed on a printed circuit board (PCB). The connecting structure may be positioned in a first direction with respect to the through hole to connect a first space between the speaker and the enclosure and a second space between the PCB and the shield can via the through hole, for resonance of the audio signal. The connecting structure may be in contact with a first side of the enclosure that at least partially surrounds the first space and a second side of the shield can that at least partially surrounds the second space. The connecting structure may include a first slit and a second slit. The first slit may be aligned with a first opening of the first side. The first slit may connect the first space and an internal space of the connecting structure. The second slit may be aligned with a second opening of the second side. The second slit may connect the second space and the internal space of the connecting structure.

### [Description of the Drawings]

FIG. 1 is a block diagram of an electronic device in a network environment according to an embodiment.
FIG. 2A illustrates an exemplary electronic device.
FIG. 2B is an exploded perspective view of an exemplary electronic device.
FIG. 3 illustrates an exemplary speaker module.
FIG. 4A is a rear view of an exemplary electronic device in which a rear plate is omitted.
FIG. 4B is a front view of an exemplary electronic device in which a display is omitted.
FIG. 4C illustrates an exemplary speaker module, shield can, and connecting structure.
FIG. 4D is an exemplary exploded perspective view of FIG. 4C.
FIG. 4E is a cross-sectional view of an exemplary electronic device cut along line A-A' of FIG. 4C.
FIG. 5A is a cross-sectional view of an exemplary electronic device cut along line B-B' of FIG. 4A.
FIG. 5B illustrates an exemplary connecting structure and cover sheet.
FIG. 5C is a perspective view of an exemplary speaker module, shield can, and connecting structure.
FIG. 5D is a cross-sectional view of an exemplary electronic device cut along line B-B' of FIG. 4A.
FIG. 6A is a cross-sectional view of an exemplary electronic device cut along line B-B' of FIG. 4A.
FIG. 6B illustrates an exemplary connecting structure.
FIG. 6C is a perspective view of an exemplary speaker module, shield can, and connecting structure.
FIG. 7A is a cross-sectional view of an exemplary electronic device cut along line B-B' of FIG. 4A.
FIG. 7B is a perspective view of an exemplary speaker module, shield can, and connecting structure.
FIG. 8A is a cross-sectional view of an exemplary electronic device cut along line B-B' of FIG. 4A.
FIG. 8B illustrates an exemplary connecting structure.
FIG. 8C is a perspective view of an exemplary speaker module, shield can, and connecting structure.
FIG. 9A illustrates a portion of an exemplary electronic device.
FIG. 9B is a cross-sectional view of an exemplary electronic device cut along line C-C' of FIG. 9A.
FIG. 10A is a front view of an exemplary electronic device in which an exemplary display is omitted.
FIG. 10B is a cross-sectional view of an exemplary electronic device cut along line D-D' of FIG. 10A.
FIG. 10C is a cross-sectional view of an exemplary electronic device cut along line E-E' of FIG. 10A.

### [Mode for Invention]

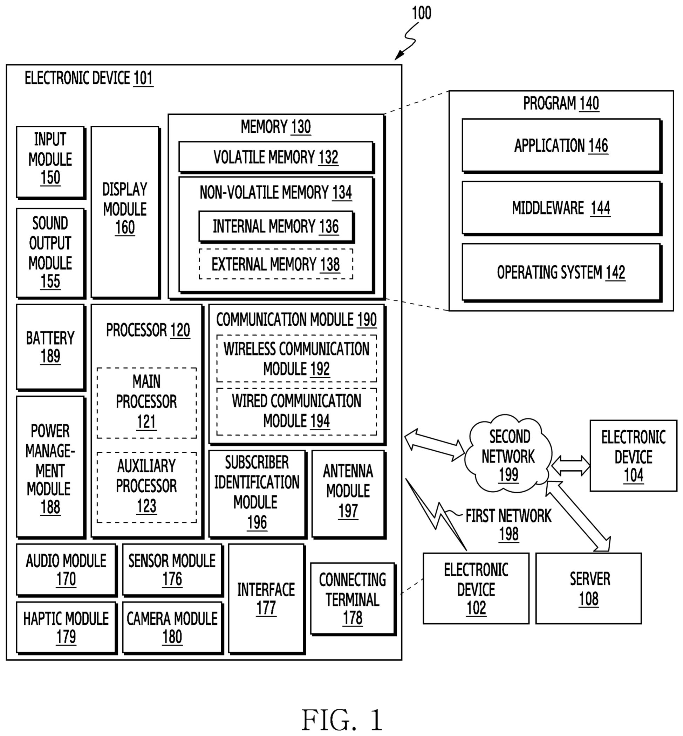

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

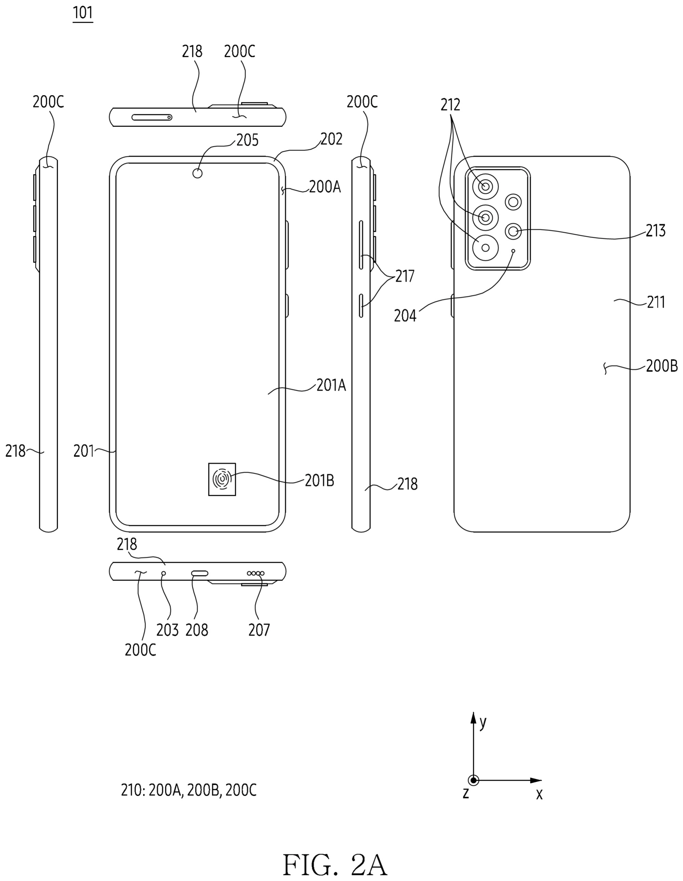

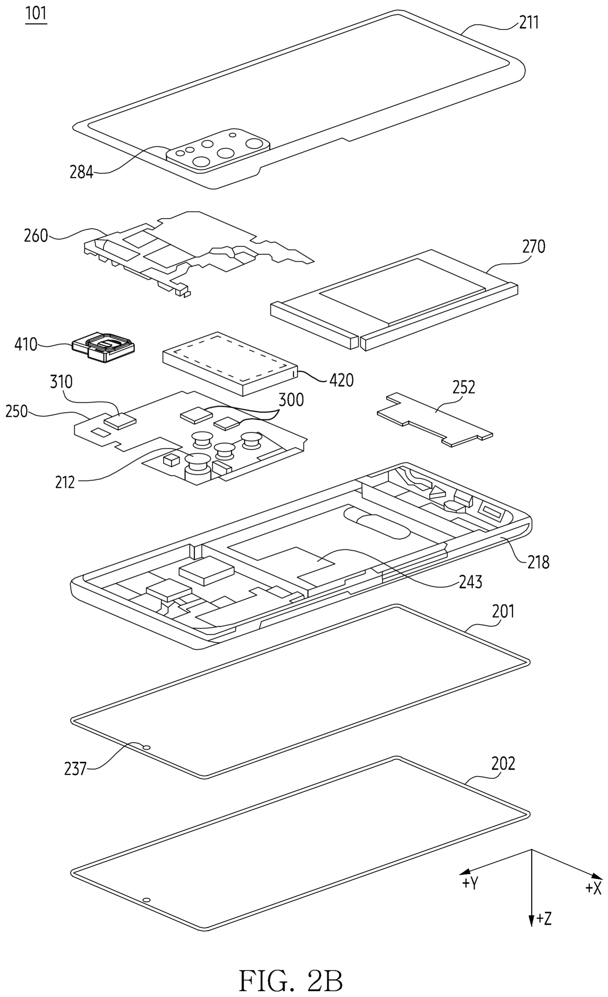

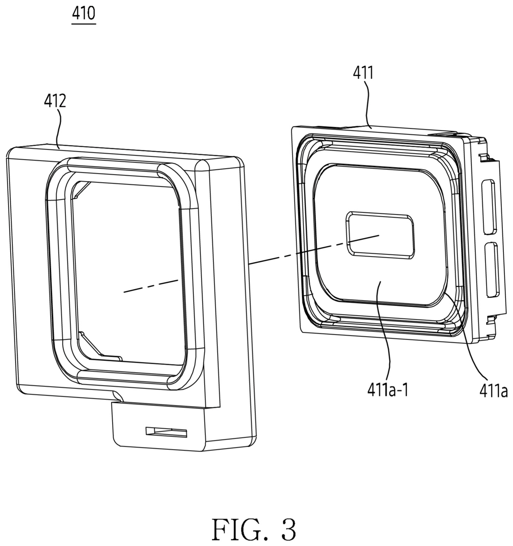

FIG. 2A illustrates an exemplary electronic device 101. FIG. 2B is an exploded perspective view of the exemplary electronic device 101. FIG. 3 illustrates an exemplary speaker module 410.

Referring to FIGS. 2A and 2B, the electronic device 101 according to an embodiment may include a housing 210 forming an exterior of the electronic device 101. For example, the housing 210 may include a first side (or front side) 200A, a second side (or rear side) 200B, and a third side (or lateral side) 200C surrounding a space between the first side 200A and the second side 200B. According to an embodiment, the housing 210 may refer to a structure forming at least a portion of the first side 200A, the second side 200B, and/or the third side 200C.

According to an embodiment, the electronic device 101 may include a first plate 202 that is substantially transparent. According to an embodiment, the first plate 202 may form at least a portion of the first side 200A. According to an embodiment, the first plate 202 may include, for example, a glass plate or a polymer plate including various coating layers, but is not limited thereto. The first plate 202 may be referred to as a front plate.

According to an embodiment, the electronic device 101 may include a second plate 211 that is substantially opaque. According to an embodiment, the second plate 211 may form at least a portion of the second side 200B. According to an embodiment, the second plate 211 may be formed of coated or colored glass, ceramic, polymer, metal (e.g., aluminum, stainless steel (STS), or magnesium), or a combination of at least two of the above materials. The second plate 211 may be referred to as a rear plate.

According to an embodiment, the electronic device 101 may include a side bezel (or a side member) (e.g., a side bezel 218 of FIG. 2B). According to an embodiment, the side bezel 218 may be coupled with the first plate 202 and/or the second plate 211 to form at least a portion of the third side 200C of the electronic device 101. For example, the side bezel 218 may entirely form the third side 200C of the electronic device 101. For example, the side bezel 218 may form the third side 200C of the electronic device 101 together with the first plate 202 and/or the second plate 211.

Unlike the illustrated embodiment, when the third side 200C of the electronic device 101 is partially formed by the first plate 202 and/or the second plate 211, the first plate 202 and/or the second plate 211 may include a region that is bent from a periphery thereof toward the second plate 211 and/or the first plate 202 and seamlessly extends. For example, the extending region of the first plate 202 and/or the second plate 211 may be positioned at both ends of a long edge of the electronic device 101, but is not limited by the above-described example.

According to an embodiment, the side bezel 218 may include a metal and/or a polymer. According to an embodiment, the second plate 211 and the side bezel 218 may be integrally formed and may include the same material (e.g., a metallic material such as aluminum), but are not limited thereto. For example, the second plate 211 and the side bezel 218 may be formed in separate configurations or may include different materials.

According to an embodiment, the electronic device 101 may include at least one of a display 201, audio modules 203, 204, and 207, a sensor module (not illustrated), camera modules 205, 212, and 213, a key input device 217, a light emitting element (not illustrated), and/or a connector hole 208. According to an embodiment, the electronic device 101 may omit at least one (e.g., the key input device 217 or the light emitting element (not illustrated)) of the above components, or may additionally include another component.

According to an embodiment, the display 201 (e.g., the display module 160 of FIG. 1) may be visually exposed through a significant portion of the first plate 202. For example, at least a portion of the display 201 may be visible through the first plate 202 forming the first side 200A. According to an embodiment, the display 201 may be disposed on a rear side of the first plate 202.

According to an embodiment, an outer shape of the display 201 may be formed substantially the same as an outer shape of the first plate 202 adjacent to the display 201. According to an embodiment, in order to expand an area in which the display 201 is visually exposed, a gap between an outer edge of the display 201 and an outer edge of the first plate 202 may be formed substantially the same.

According to an embodiment, the display 201 (or the first side 200A of the electronic device 101) may include a screen display region 201A. According to an embodiment, the display 201 may provide visual information to a user through the screen display region 201A. In the illustrated embodiment, when the first side 200A is viewed from the front, the screen display region 201A is shown to be spaced apart from an outer edge of the first side 200A and positioned at the inside of the first side 200A, but is not limited thereto. According to an embodiment, when the first side 200A is viewed from the front, at least a portion of a periphery of the screen display region 201A may substantially match a periphery of the first side 200A (or the first plate 202).

According to an embodiment, the screen display region 201A may include a sensing region 201B configured to obtain the user's biometric information. Herein, the meaning of "the screen display region 201A includes the sensing region 201B" may be understood as that at least a portion of the sensing region 201B may be overlapped with the screen display region 201A. For example, the sensing region 201B may refere to a region capable of displaying visual information by the display 201, like other regions of the screen display area 201A, and additionally obtaining the user's biometric information (e.g., fingerprint). According to an embodiment, the sensing region 201B may be formed in the key input device 217.

According to an embodiment, the display 201 may include a region in which a first camera module 205 (e.g., the camera module 180 of FIG. 1) is positioned. According to an embodiment, an opening may be formed in the region of the display 201, and the first camera module 205 (e.g., punch hole camera) may be at least partially disposed in the opening to face the first side 200A. In this case, the screen display region 201A may surround at least a portion of a periphery of the opening. According to an embodiment, the first camera module 205 (e.g., under display camera (UDC)) may be disposed below the display 201 to overlap the region of the display 201. In this case, the display 201 may provide visual information to the user through the region, and additionally, the first camera module 205 may obtain an image corresponding to a direction facing the first side 200A through the region of the display 201.

According to an embodiment, the display 201 may be coupled to or disposed adjacent to a touch sensing circuit, a pressure sensor capable of measuring intensity (pressure) of touch, and/or a digitizer that detects a magnetic field type stylus pen.

According to an embodiment, the audio modules 203, 204, and 207 (e.g., the audio module 170 of FIG. 1) may include microphone holes 203 and 204 and speaker holes 207.

According to an embodiment, the microphone holes 203 and 204 may include a first microphone hole 203 formed in a partial region of the third side 200C and a second microphone hole 204 formed in a partial region of the second side 200B. A microphone (not illustrated) for obtaining external sound may be disposed within the microphone holes 203 and 204. The microphone may include a plurality of microphones to sense a direction of sound.

According to an embodiment, the second microphone hole 204 formed in a partial region of the second side 200B may be disposed adjacent to the camera modules 205, 212, and 213. For example, the second microphone hole 204 may obtain a sound according to an operation of the camera modules 205, 212, and 213. However, it is not limited thereto.

According to an embodiment, the speaker hole 207 may include an external speaker hole 207 and a call receiver hole (not illustrated). The external speaker hole 207 may be formed in a portion of the third side 200C of the electronic device 101. According to an embodiment, the external speaker hole 207 and the microphone hole 203 may be implemented as one hole. Although not illustrated, a call receiver hole (not illustrated) may be formed on another portion of the third side 200C. For example, the call receiver hole may be formed on the opposite side of the external speaker hole 207 from the third side 200C. For example, based on the illustration of FIG. 2A, the external speaker hole 207 may be formed on the third side 200C corresponding to a lower end of the electronic device 101, and the call receiver hole may be formed on the third side 200C corresponding to an upper end of the electronic device 101. However, it is not limited thereto, and according to an embodiment, the call receiver hole may be formed in a position other than the third side 200C. For example, the call receiver hole may be formed by a space separated between the first plate 202 (or the display 201 and the side bezel 218.

According to an embodiment, the electronic device 101 may include a speaker module 410 configured to output an audio signal to the outside of the housing 210 through the external speaker hole 207 and/or the call receiver hole (not illustrated).

According to an embodiment, a sensor module (not illustrated) (e.g., the sensor module 176 of FIG. 1) may generate an electrical signal or a data value corresponding to an operating state inside the electronic device 101 or an external environmental state. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, 213 (e.g., the camera module 180 of FIG. 1) may include a first camera module 205 disposed to face the first side 200A of the electronic device 101, a second camera module 212 disposed to face the second side 200B, and a flash 213.

According to an embodiment, the second camera module 212 may include a plurality of cameras (e.g., a dual camera, a triple camera, or a quad camera). However, the second camera module 212 is not necessarily limited to including a plurality of cameras, and may include one camera.

According to an embodiment, the first camera module 205 and the second camera module 212 may include one or more lenses, an image sensor, and/or an image signal processor.

According to an embodiment, the flash 213 may include, for example, a light emitting diode or a xenon lamp. According to an embodiment, two or more lenses (infrared camera, wide-angle and telephoto lens) and image sensors may be disposed on one side of the electronic device 101.

According to an embodiment, the key input device 217 (e.g., the input module 150 of FIG. 1) may be disposed on the third side 200C of the electronic device 101. According to an embodiment, the electronic device 101 may not include some or all of the key input devices 217, and the key input device 217 that is not included may be implemented in another form, such as a soft key, on the display 201.

According to an embodiment, the connector hole 208 may be formed on the third side 200C of the electronic device 101 so that a connector of an external device may be accommodated. A connecting terminal (e.g., the connecting terminal 178 of FIG. 1) electrically connected to a connector of an external device may be disposed in the connector hole 208. According to an embodiment, the electronic device 101 may include an interface module (e.g., the interface 177 of FIG. 1) for processing an electrical signal transmitted and received via the connecting terminal.

According to an embodiment, the electronic device 101 may include a light emitting element (not illustrated). For example, the light emitting element (not illustrated) may be disposed on the first side 200A of the housing 210. The light emitting element (not illustrated) may provide state information of the electronic device 101 in an optical form. According to an embodiment, the light emitting element (not illustrated) may provide a light source linked with an operation of the first camera module 205. For example, the light emitting element (not illustrated) may include an LED, an IR LED, and/or a xenon lamp.

Referring to FIG. 2B, the electronic device 101 according to an embodiment may include a side bezel 218, a support 243, a printed circuit board (PCB) 250, a sub-PCB 252, a cover plate 260, and a battery 270.

According to an embodiment, the electronic device 101 may include the side bezel 218 forming an exterior (e.g., the third side 200C of FIG. 2A) of the electronic device 101 and the support 243 extending inward from the side bezel 218. According to an embodiment, the side bezel 218 and the support 243 may be disposed between the display 201 and the second plate 211. For example, the side bezel 218 may surround a space between the second plate 211 and the first plate 202 (and/or the display 201). For example, the support 243 may extend from the side bezel 218 within the space.

According to an embodiment, the support 243 may support or accommodate other components included in the electronic device 101. For example, the display 201 may be disposed on a side of the support 243 facing a direction (e.g., +z direction), and the display 201 may be supported by the support 243. For example, the PCB 250, the sub-PCB 252, the battery 270, and the second camera module 212 may be disposed on another side of the support 243 (e.g., in the -z direction) opposite to the direction. The PCB 250, the sub-PCB 252, the battery 270, and the second camera module 212 may be respectively seated in recesses defined by the side bezel 218 and/or the support 243 of the frame structure 240.

According to an embodiment, the PCB 250, the sub-PCB 252, and the battery 270 may be coupled to the support 243, respectively. For example, the PCB 250 and the sub-PCB 252 may be fixedly disposed on the support 243 through a coupling member such as a screw. For example, the battery 270 may be fixedly disposed on the support 243 through an adhesive member (e.g., a double-sided tape). However, it is not limited by the above-described example.

According to an embodiment, the cover plate 260 may be disposed between the PCB 250 and the second plate 211. According to an embodiment, the cover plate 260 may be disposed on the PCB 250. For example, the cover plate 260 may be disposed on a side of the PCB 250 facing the -z direction.

According to an embodiment, the cover plate 260 may at least partially overlap the PCB 250 with respect to the z-axis. According to an embodiment, the cover plate 260 may cover at least a portion of the PCB 250. Accordingly, the cover plate 260 may protect the PCB 250 from physical impact or prevent the connector coupled to the PCB 250 from being separated.

According to an embodiment, the cover plate 260 may be fixedly disposed on the PCB 250 through a coupling member (e.g., a screw), or may be coupled to the support 243 together with the PCB 250 through the coupling member.

According to an embodiment, the display 201 may be disposed between the support 243 and the first plate 202. For example, the first plate 202 may be disposed on a side (e.g., +z direction) of the display 201, and the support 243 may be disposed on another side (e.g., -z direction) of the display 201.

According to an embodiment, the first plate 202 may be coupled to the display 201. For example, the first plate 202 and the display 201 may be adhered to each other through an optical adhesive member (e.g., optically clear adhesive (OCA) or optically clear resin (OCR)) interposed therebetween.

According to an embodiment, the first plate 202 may be coupled to the side bezel 218. For example, the first plate 202 may include an outer portion extending outside the display 201 when viewed in the z-axis direction, and may be attached to the side bezel 218 through an adhesive member (e.g., double-sided tape) placed between the outer portion of the first plate 202 and the side bezel 218. However, it is not limited by the above-described example.

According to an embodiment, a processor (e.g., the processor 120 of FIG. 1), memory (e.g., the memory 130 of FIG. 1), and/or an interface (e.g., the interface 177 of FIG. 1) may be mounted on the PCB 250 and/or the sub-PCB 252. For example, the processor may include one or more of a central processing unit, an application processor, a graphic processing unit, an image signal processor, a sensor hub processor, or a communication processor. For example, the memory may include a volatile memory or a non-volatile memory. For example, an interface may include a high definition multimedia interface (HDMI), a universal serial bus (USB), an SD card interface, and/or an audio interface. The interface may electrically or physically connect the electronic device 101 with an external electronic device, and may include a USB connector, an SD card/MMC connector, or an audio connector. According to an embodiment, the PCB 250 and the sub-PCB 252 may be operably or electrically connected with each other via a connecting member (e.g., flexible PCB).

According to an embodiment, the battery 270 (e.g., the battery 189 of FIG. 1) may supply power to at least one component of the electronic device 101. For example, the battery 270 may include a rechargeable secondary battery or a fuel cell. At least a portion of the battery 270 may be disposed on substantially the same plane as the PCB 250 and/or the sub-PCB 252.

The electronic device 101 according to an embodiment may include an antenna module (not illustrated) (e.g., the antenna module 197 of FIG. 1). According to an embodiment, the antenna module may be disposed between the second plate 211 and the battery 270. For example, the antenna module may include a near field communication (NFC) antenna, a wireless charging antenna, and/or a magnetic secure transmission (MST) antenna. For example, the antenna module may perform short-range communication with an external device, or wirelessly transmit power to and receive power from an external device.

According to an embodiment, the first camera module 205 (e.g., the front camera) may be disposed on at least a portion of the support 243 so that the lens may receive external light through some regions (e.g., the camera region 237) of the first plate 202 (e.g., the front side 200A of FIG. 2A).

According to an embodiment, the second camera module 212 (e.g., rear camera) may be disposed between the support 243 and the second plate 211. According to an embodiment, the second camera module 212 may be electrically connected to the PCB 250 through a connecting member (e.g., connector). According to an embodiment, the second camera module 212 may be disposed so that the lens may receive external light through a camera region 284 of the second plate 211 of the electronic device 101.

According to an embodiment, the camera region 284 may be formed on a surface (e.g., the rear side 200B of FIG. 2A) of the second plate 211. According to an embodiment, the camera region 284 may be at least partially transparent so that external light may be incident on the lens of the second camera module 212. According to an embodiment, at least a portion of the camera region 284 may protrude from the surface of the second plate 211 by a predetermined height. However, it is not limited thereto, and according to an embodiment, the camera region 284 may formed a substantially same plane as the surface of the second plate 211.

According to an embodiment, the housing 210 of the electronic device 101 may mean a configuration or a structure forming at least a portion of an exterior of the electronic device 101. In this respect, at least a portion of the first plate 202, the side bezel 218, and/or the second plate 211 forming the exterior of the electronic device 101 may be referred to as the housing 210 of the electronic device 101.

According to an embodiment, the electronic device 101 may include a shield can 420 covering at least a portion of the PCB 250. The PCB 250 may include a plurality of conductive layers and a plurality of non-conductive layers alternately laminated with the plurality of conductive layers. The PCB 250 may provide an electrical connection of the electronic components 300 disposed on the PCB 250, by using a wiring and a conductive via formed by the conductive layers. The shield can 420 may surround the electronic components 300 disposed on the PCB 250. For example, the shield can 420 may be disposed over at least a portion of the PCB 250. The electronic components 300 disposed between the PCB 250 and the shield can 420 may be accommodated in a space surrounded by the shield can 420. The shield can 420 may be configured to block electromagnetic interference between the electronic components 300 accommodated in the shield can 420 and electronic components outside the shield can 420. For example, the shield can 420 may be configured to shield electromagnetic waves emitted from the electronic components 300 accommodated in the shield can 420 from reaching other electronic components 310 outside the shield can 420, and to shield electromagnetic waves emitted from the other electronic components 310 from entering the shield can 420. For example, the other electronic components 310 may include an antenna module (e.g., the antenna module 197 of FIG. 1), but are not limited thereto. For example, the shield can 420 may be electrically connected to a ground portion of the PCB 250. For example, the shield can 420 may include a metal to shield electromagnetic waves. The shield can 420 may protect the electronic components 300 accommodated in the shield can 420 from external impact.

According to an embodiment, the electronic device may include a speaker module 410. According to an embodiment, the speaker module 410 may be positioned below (e.g., in the -z direction) the support 243. According to an embodiment, the speaker module 410 may be configured to output an audio signal. Referring to FIG. 3, the speaker module 410 may include a speaker 411 and an enclosure 412. The speaker 411 may be configured to output an audio signal. For example, the speaker 411 may include a diaphragm 411a configured to output an audio signal by vibrating based on an electrical signal, at least one voice coil providing vibration to the diaphragm 411a, and a permanent magnet configured to form a magnetic field, but is not limited thereto. The diaphragm 411a may include a side (e.g., front side) facing the display 201 and another side (e.g., rear side) 411a-1 opposite the side.

According to an embodiment, the enclosure 412 may surround the speaker 411. For example, the enclosure 412 may be referred to as a speaker housing forming an exterior of the speaker module 410. The enclosure 412 may provide an internal space for the speaker 411, by surronding the speaker 411. For example, the audio signal emitted from the speaker 411 may resonate within a space surrounded by the enclosure 412. The enclosure 412 may be connected to the speaker hole to provide a path through which an audio signal is transmitted to an audio hole. The audio signal generated by the vibration of the diaphragm 411a may be transmitted to the audio hole through the enclosure 412 and transmitted to the outside of the electronic device 101 through the audio hole.

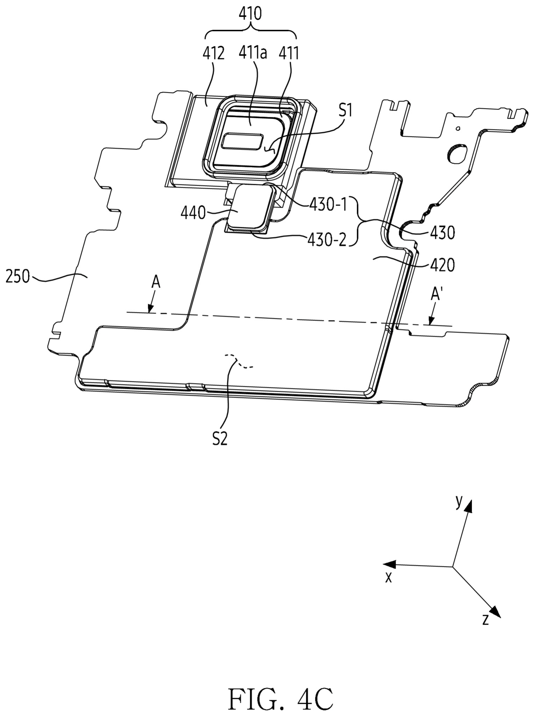

According to an embodiment, the audio signal outputted from the speaker 411 may resonate within a first space (S1 of FIG. 4C) between the enclosure 412 and the speaker 411 surrounded by the enclosure 412. Since a volume inside the enclosure 412 is larger than a volume of the speaker 411, an empty space may be formed between the speaker 411 and the enclosure 412. The empty space may be referred to as the first space S1. The first space S1 may be referred to as a rear space, which is a space between another side (e.g., rear side) 411a-1 of the diaphragm 411a and the enclosure 412.

According to an embodiment, the first space S1 may be configured to provide a resonance space for resonance of an audio signal. The audio signal may resonate in the first space S1 and have a resonance frequency based on the resonance space. For example, the speaker 411 may be configured to receive a signal including audio information from a processor (e.g., the processor 120 of FIG. 1) and output an audio signal based on the received audio signal.

The audio signal generated through the vibration of the diaphragm 411a may be transmitted to the resonance space to resonate. A resonance frequency of the audio signal may be changed according to a volume of the resonance space. The speaker 411 may provide an audio signal to a user, based on a resonance frequency based on the volume of the resonance space. In order for the electronic device 101 to provide an audio signal having a resonance frequency within a designated frequency range, the volume of the resonance space may be required. An audio signal on a relatively low audio frequency band may have a longer wavelength due to its lower frequency compared to a signal on a relatively high audio frequency band. In order to implement an audio on a relatively low audio frequency band, a resonance space having a certain volume or more may be required. As the resonance space increases, a quality of an audio signal on a lower audio frequency band may be improved. For example, a rear space surrounding another side (e.g., rear side) 411a-1 of the diaphragm 411a may affect a quality of an audio signal outputted by the vibration of the diaphragm 411a. When a volume of the rear space increases, the output of an audio signal on a low audio frequency band outputted from the speaker 411 may increase. Since electronic components for implementing various functions of the electronic device 101 are mounted within the housing 210, a resonance space for an audio signal may be reduced. As a volume of the resonance space decreases, a resonance space for resonance of an audio signal on a low audio frequency band among audio signals outputted from the speaker 411 may be insufficient. When the resonance space is insufficient, a quality and/or a volume of the audio signal on the low audio frequency band may be deteriorated.

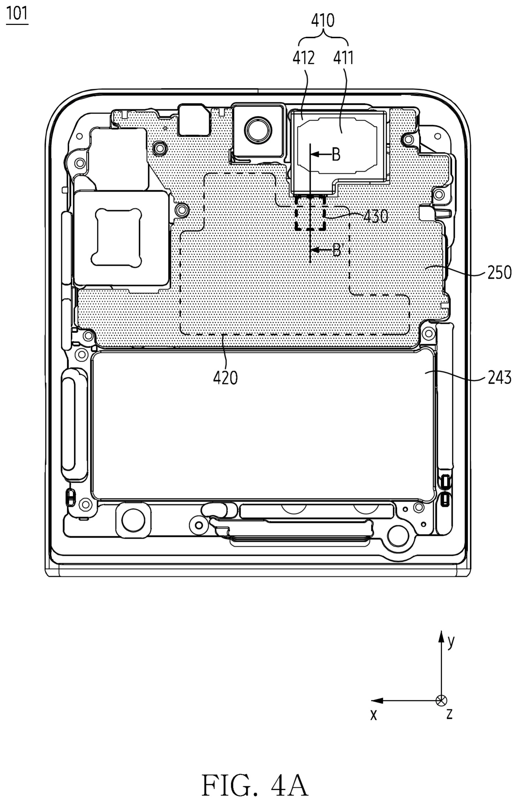

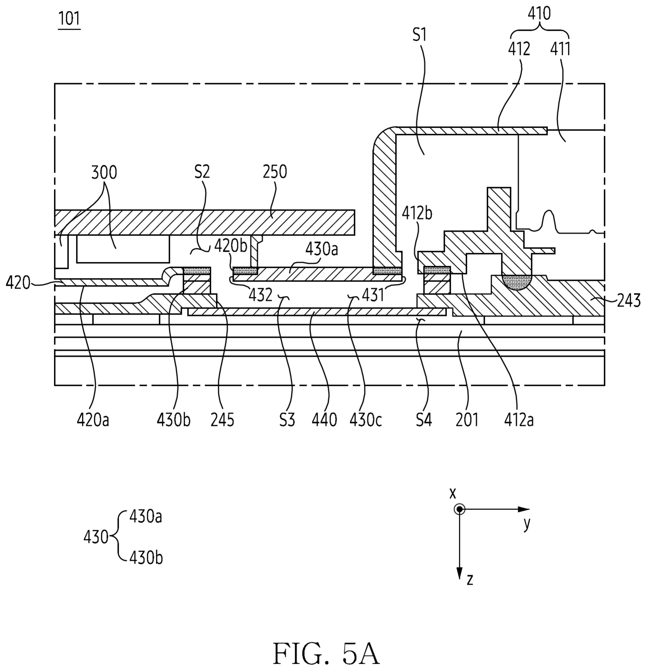

According to an embodiment, the electronic device 101 may include a connecting structure (e.g., a connecting structure 430 of FIG. 4A) configured to expand a resonance space for resonance of an audio signal. The connecting structure 430 may be configured to connect a first space S1 for resonance of an audio signal to an additional space (e.g., a second space S2 and a third space S3 of FIG. 5A). As a space for resonance of an audio signal is expanded, a quality of an audio signal on a relatively low audio frequency band may be improved. Hereinafter, the connecting structure 430 configured to expand a resonance space will be described with reference to the drawing. In various embodiments of the present disclosure, the meaning of "spaces are connected" may indicate that a plurality of spaces, which are distinguished from each other, are in fluid communication with each other. The plurality of spaces in fluid communication may provide a space for vibrating air, by allowing the flow of air. For example, spaces connected to each other may be referred to as one space that provides air vibrations that generate an audio signal.

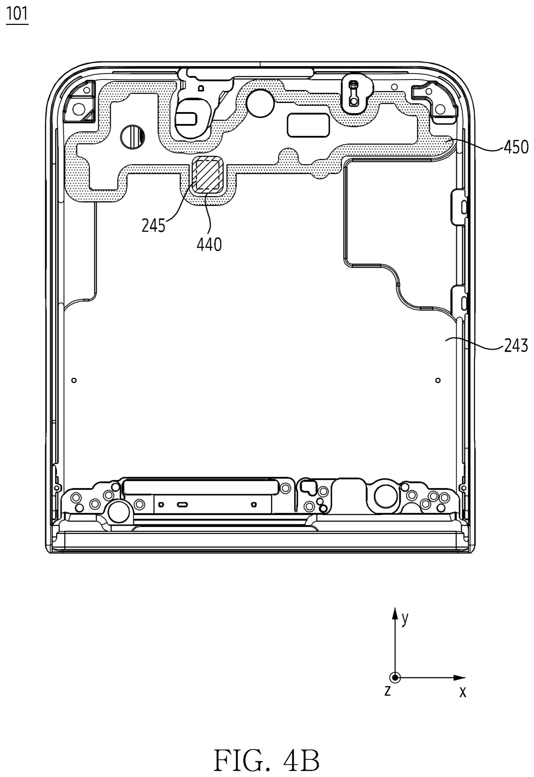

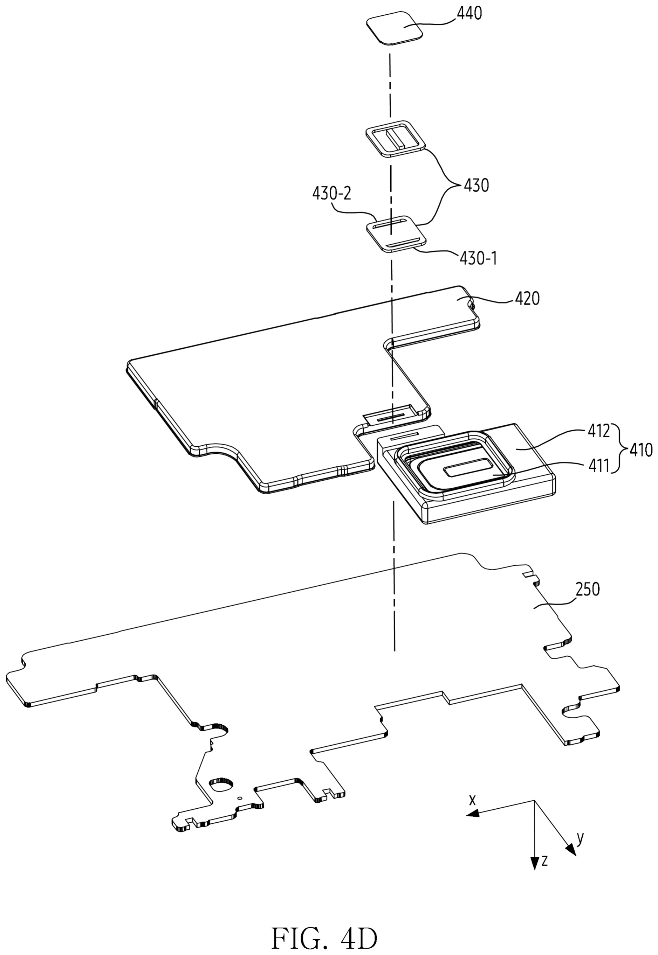

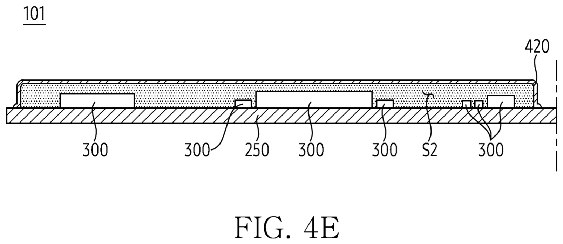

FIG. 4A is a rear view of an exemplary electronic device 101 in which a rear plate is omitted. FIG. 4B is a front view of the exemplary electronic device 101 in which a display 201 is omitted. FIG. 4C illustrates a speaker module 410, a shield can 420, and a connecting structure 430. FIG. 4D is an exploded perspective view of FIG. 4C. FIG. 4E is a cross-sectional view of the exemplary electronic device 101 cut along line A-A' of FIG. 4C.

Referring to FIG. 4A, the speaker module 410 may be adjacent to a printed circuit board (PCB) 250. For example, a shape of a portion of a periphery of the PCB 250 may correspond to a shape of a portion of a periphery of the speaker module 410. The speaker module 410 may be positioned at a periphery corresponding to a shape of the speaker module 410. The shield can 420 and the connecting structure 430 may be positioned over (e.g., in +z direction) the PCB 250. For example, the shield can 420 positioned over the PCB 250 may cover electronic components (e.g., the electronic components 300 of FIG. 4E) disposed on the PCB 250. The connecting structure 430 may at least partially overlap the speaker module 410 and the shield can 420. A space within the enclosure 412 and a space within the shield can 420 may be connected through the connecting structure 430.

Referring to FIG. 4B, the support 243 may be disposed below (e.g., in the -z direction) the display 201 of FIG. 2B. For example, the display 201 may be attached on the support 243 through an attaching member 450. For example, the attaching member 450 may be positioned in a space between the display 201 and the support 243. Due to a thickness of the attaching member 450, a gap may be formed between the display 201 and the support 243.

According to an embodiment, the support 243 may include a through hole 245. The electronic device 101 may include a cover sheet 440 positioned over (e.g., in +z direction) the through hole 245. The cover sheet 440 may seal the through hole 245 by covering the through hole 245. For example, the cover sheet 440 may include an airtight material for blocking the flow of air through the through hole 245. The through hole 245 may be shielded by the cover sheet 440.

Referring to FIGS. 4C and 4D, the speaker module 410 and the shield can 420 may be spaced apart from each other. The connecting structure 430 may be positioned below (e.g., in the -z direction) the through hole (e.g., the through hole 245 of FIG. 4B) and the cover sheet 440. The shield can 420 may be positioned below (e.g., in the -z direction) the PCB 250 to cover some regions of the PCB 250. The connecting structure 430 may at least partially overlap the speaker module 410 and the shield can 420. For example, an end 430-1 of the connecting structure 430 may be positioned above (e.g., in the +z direction) the speaker module 410, and another end 430-2 of the connecting structure 430 may be positioned above (e.g., in the +z direction) the shield can 420. The connecting structure 430 at least partially overlapping the speaker module 410 and the shield can 420 may provide a space for connecting an internal space of the speaker module 410 and an internal space of the shield can 420. For example, the connecting structure 430 and the through hole 245 may be configured to connect an internal space (e.g., first space (S1)) of the speaker module 410 and an internal space (e.g., second space (S2)) of the shield can 420. For example, the first space S1 may be referred to as a space surrounding a rear side of the diaphragm 411a.

Referring to FIG. 4E, the electronic components 300 disposed on the PCB 250 may occupy a volume of each of the electronic components 300. The electronic components 300 disposed on the PCB 250 may be spaced apart from each other. The shield can 420 may be disposed on a side of the PCB 250 on which the electronic components 300 are disposed, to cover the electronic components 300 disposed on the PCB 250. The shield can 420 may be spaced apart from the electronic components 300 to cover the electronic components 300. Since the electronic components 300 are spaced apart from each other and the shield can 420 is spaced apart from the electronic components 300, an empty space may be formed between the PCB 250 and the shield can 420. For example, when a volume between the PCB 250 and the shield can 420 is a first volume and the sum of volumes of the electronic components 300 surrounded by the shield can 420 is a second volume, a volume of a space between the PCB 250 and the shield can 420 may be a difference between the first volume and the second volume. The space between the PCB 250 and the shield can 420 may be referred to as the second space S2.

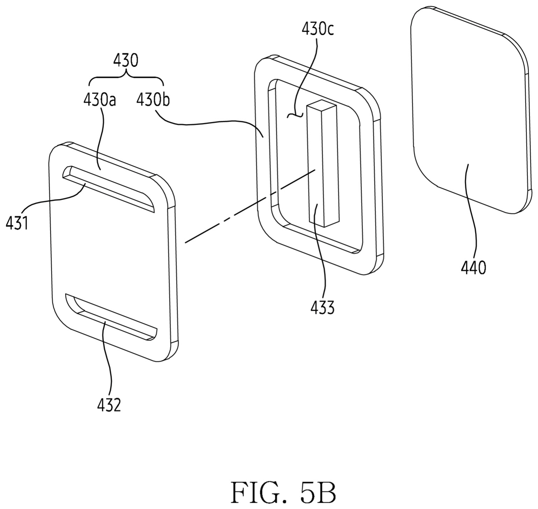

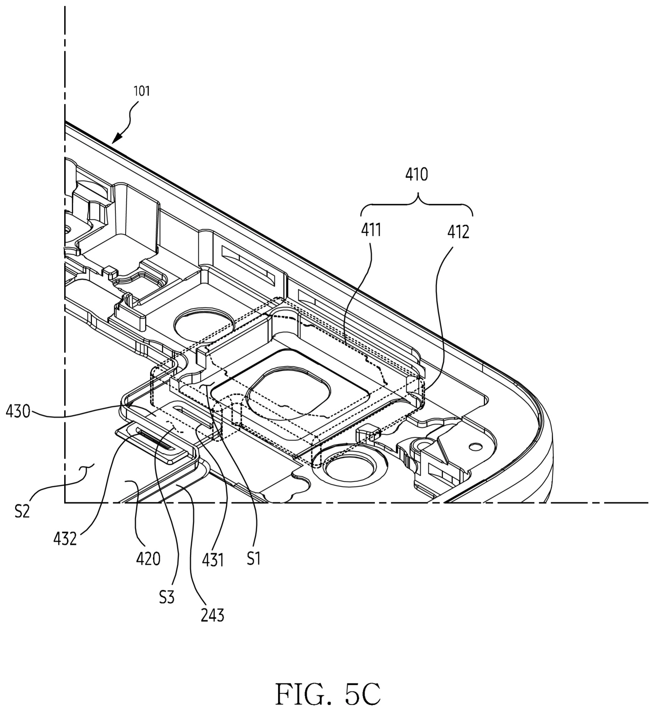

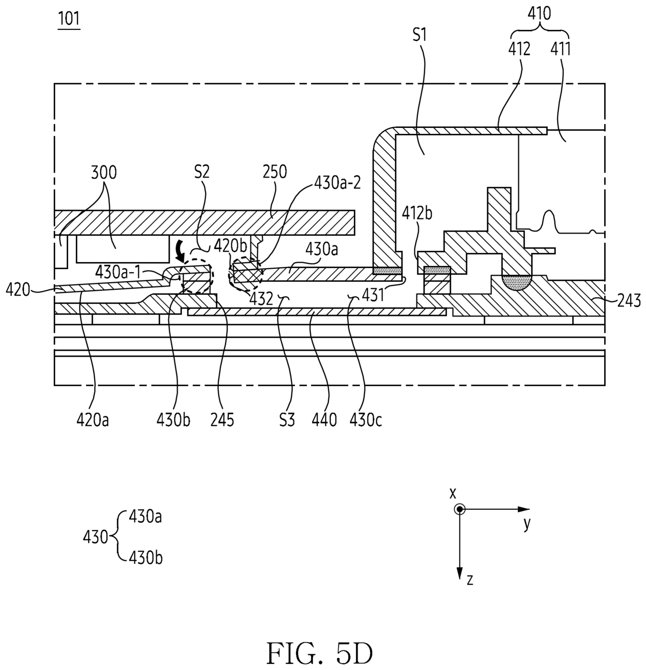

FIG. 5A is a cross-sectional view of an exemplary electronic device 101 cut along line B-B' of FIG. 4A. FIG. 5B illustrates an exemplary connecting structure 430 and cover sheet 440. FIG. 5C is a perspective view of an exemplary speaker module 410, shield can 420, and connecting structure 430. FIG. 5D is a cross-sectional view of the exemplary electronic device 101 cut along line B-B' of FIG. 4A.

Referring to FIGS. 5A and 5B, the connecting structure 430 may connect a first space S1 between a speaker 411 and an enclosure 412 to a second space S2 between a printed circuit board (PCB) 250 and a shield can 420 through a through hole 245. For example, the connecting structure 430 may be positioned below (e.g., in the -z direction) the through hole 245. The cover sheet 440 disposed over (e.g., in the +z direction) the through hole 245 may separate the through hole 245 from a fourth space S4 between a display 201 and a support 243. The cover sheet 440 may include an airtight material through which air does not flow to separate the through hole 245 from the fourth space S4. A third space S3 between the connecting structure 430 and the cover sheet 440 may be formed by the cover sheet 440 positioned above (e.g., in the +z direction) the through hole 245 and the connecting structure 430 positioned below (e.g., in the -z direction) the through hole 245.

According to an embodiment, the connecting structure 430 may be in contact with the speaker module 410 and the shield can 420. For example, the connecting structure 430 may be in contact with a first side 412a of the enclosure 412 that at least partially surrounds a first space S1 and a second side 420a of the shield can 420 that at least partially surrounds a second space S2, respectively. The connecting structure 430 may be positioned below (e.g., in the -z direction) the support 243 to be at least partially overlapped with the speaker module 410 and the shield can 420.

According to an embodiment, the connecting structure 430 may include a first body 430a and a second body 430b. The first body 430a may include a first slit 431 and a second slit 432. The first slit 431 and the second slit 432 may penetrate the first body 430a. For example, the first slit 431 and the second slit 432 may be formed by cutting a portion of the first body 430a, but are not limited thereto.

According to an embodiment, the first slit 431 and the second slit 432 may be spaced apart from each other. The first slit 431 may be aligned with a first opening 412b of the first side 412a. The second slit 432 may be aligned with a second opening 420b of the second side 420a. The first slit 431 may connect the first space S1 and an internal space of the connecting structure 430. The second slit 432 may connect the second space S2 and an internal space of the connecting structure 430.

According to an embodiment, the second body 430b may be positioned between the first body 430a and the support 243. For example, the second body 430b may be positioned over (e.g., in +z direction) the first body 430a along a periphery of the first body 430a. The second body 430b may include an opening 430c connected to the first slit 431 and the second slit 432. For example, a shape of the second body 430b may be a ring shape formed along a periphery of the first body 430a, and the opening 430c may be positioned over (e.g., in the +z direction) the first slit 431 and the second slit 432. The second body 430b may support the first body 430a. For example, the second body 430b may form an internal space of the connecting structure 430 by supporting the first body 430a between the first body 430a and the support 243. The internal space of the connecting structure 430 may be referred to as the third space S3 between the connecting structure 430 and the cover sheet 440.

According to an embodiment, the connecting structure 430 may connect the first space S1 with the second space S2, for a resonance space for resonance of an audio signal. The first space S1 and the second space S2 may be connected through the third space S3 between the connecting structure 430 and the cover sheet 440. A resonance space for resonance of an audio signal outputted from the speaker 411 may include the first space S1, the second space S2, and the third space S3. The audio signal may be configured to resonate through the first space S1, the second space S2, and the third space S3 connected to each other. As the resonance space is expanded to the first space S1, the second space S2, and the third space S3, the resonance space for resonance of an audio signal may be expanded by utilizing a space inside the electronic device 101 without increasing a size of the speaker module 410. Since an audio signal may resonate through the expanded first space S1, second space S2, and third space S3, a quality of the audio signal may be improved.

According to an embodiment, when the resonance space is expanded, sealing of the first space S1, the second space S2, and the third space S3 connected to each other may be required. When sealing of the first space S1, the second space S2, and the third space S3 is not properly performed, the quality of the audio signal may be deteriorated. For example, an audio signal may fail to vibrate at a constant resonance frequency, and a non-uniform audio signal may be outputted. The connecting structure 430 connecting the first space S1 to the second space S2 may have a structure for sealing between the connecting structure 430 and the first space S1 and sealing between the connecting structure 430 and the second space S2. According to an embodiment, the connecting structure 430 may include a flexible material. For example, the connecting structure 430 may include at least one of sponge, rubber, tape, silicone, or urethane.

Referring to FIG. 5C, the connecting structure 430 may include a compressible sponge. For example, the speaker module 410 and the shield can 420 may be spaced apart from each other. A portion of the connecting structure 430 may overlap the speaker module 410, and another portion of the connecting structure 430 may overlap the shield can 420. A portion of the connecting structure 430 may be a portion of the connecting structure 430 including the first slit 431, and another portion of the connecting structure 430 may be a portion of the connecting structure 430 including the second slit 432. When the support 243, the speaker module 410, and the shield can 420 are fastened to each other, the connecting structure 430 may be compressed by the support 243, the speaker module 410, and the shield can 420. The portion of the connecting structure 430 overlapping the speaker module 410 may be compressed by a fastening force between the support 243 and the speaker module 410. The other portion of the connecting structure 430 overlapping the shield can 420 may be compressed by a fastening force between the support 243, the shield can 420 and/or a printed circuit board (e.g., the printed circuit board 250 of FIG. 5A). As the connecting structure 430 is compressed, sealing between remaining portions except for the first space S1, the second space S2, and the third space S3 connected to each other may be firmly performed. For example, as the portion of the connecting structure 430 including the first slit 431 is in contact with the enclosure 412, a gap between the connecting structure 430 and the enclosure 412 may be firmly sealed. The first space S1 may be connected to an internal space (e.g., the third space S3 of FIG. 5A) of the connecting structure 430 through the first slit 431. As the other portion of the connecting structure 430 including the second slit 432 is in contact with the shield can 420, a gap between the connecting structure 430 and the shield can 420 may be firmly sealed. The second space S2 may be connected to an internal space (e.g., the third space S3 of FIG. 5A) of the connecting structure 430 through the second slit 431.

Referring to FIG. 5B, the connecting structure 430 may include a supporting structure 433. The supporting structure 433 may be configured to support the connecting structure 430 in contact with the speaker module 410 and the shield can 420. For example, the supporting structure 433 may be in contact with the first body 430a and the cover sheet 440, respectively. For example, as the supporting structure 433 is positioned in the through hole 245 and at least partially supports a portion between the first slit 431 and the second slit 432 of the connecting structure 430, a volume of the third space S3 connecting the first space S1 and the second space S2 is secured. When the portion of the connecting structure 430 is compressed by the speaker module 410 and the other portion of the connecting structure 430 is compressed by the shield can 420, the volume of the third space S3 connecting the first space S1 and the second space S2 may be reduced when a portion between the portion and the other portion is compressed. The supporting structure 433 may secure the volume of the third space S3, by supporting the connecting structure 430 (e.g., the first body 430a). For example, the supporting structure 433 may include a tape attached to the first body 430a and the cover sheet 440, but is not limited thereto.

According to an embodiment, the cover sheet 440 may be configured to shield electromagnetic waves emitted from the electronic components 300 between the PCB 250 and the shield can 420. For example, the electronic components 300 may be electrically connected to another electronic component (e.g., the processor 120 of FIG. 1) through conductive layers of the PCB 250. When the electronic components 300 transmit and/or receive an electrical signal, electromagnetic waves may be emitted. The electromagnetic waves may deteriorate the communication performance of the electronic device 101. For example, the noise signal may deteriorate communication performance of an antenna module (e.g., the antenna module 197 of FIG. 1) of the electronic device 101 configured to transmit and/or receive a communication signal, by electromagnetically interacting with the antenna module. Alternatively, a radio frequency signal (RF signal) transmitted and/or received through the antenna module may be induced to the electronic components 300 and provide electromagnetic waves that cause malfunction of electronic components 300. The shield can 420 may improve electromagnetic interference (EMI) and/or electromagnetic susceptibility (EMS) by shielding the electromagnetic waves.

According to an embodiment, in order to connect the second space S2 to the third space S3, a second opening 420b may be formed on a second side 420a of the shield can 420. The second opening 420b may expose the inside of the shield can 420 to the outside of the shield can 420. Electromagnetic waves of the electronic components 300 surrounded by the PCB 250 and the shield can 420 may be emitted to the outside of the shield can 420 through the second opening 420b. An RF signal may be introduced into the electronic components 300 through the second opening 420b. The cover sheet 440 may include a material for shielding electromagnetic waves. For example, the cover sheet 440 may include a metal material (e.g., aluminum (Al), copper (Cu)). The cover sheet 440 including a metal material may shield electromagnetic waves in a wide frequency band by reflecting the electromagnetic waves. For example, the cover sheet 440 may include carbon black, a magnetic polymer composite, or graphite filaments to shield electromagnetic waves. However, it is not limited thereto. For example, the cover sheet 440 may include a soft magnetic material having a high permeability and a high saturation magnetic flux density. For example, the cover sheet 440 may include a Fe-Si-based alloy.

Referring to FIG. 5D, the shield can 420 may be tilted with respect to the connecting structure 430. When an area of the second slit 432 connecting the second space S2 and the third space S3 is insufficient, a peak and/or a dip may be formed in a specific resonance frequency band. The peak and/or the dip may deteriorate a quality of an audio signal. According to an embodiment, the shield can 420 may reduce occurrence of the peak and/or the dip by increasing an area of the second opening 420b and the second slit 432 aligned with each other. For example, the shield can 420 may be tilted with respect to the first body 430a. As the shield can 420 is tilted with respect to the first body 430a, the shield can 420 may be configured to compress a portion 430a-1 of the first body 430a attached to the second side 420a more than another portion 430a-2 of the first body 430a attached to the second side 420a. As the shield can 420 compresses the portion 430a-1 of the first body 430a more than the other portion 430a-2 of the first body 430a, a cross section of the second slit 432 may be formed as an oblique line. As the cross section of the second slit 432 is formed as an oblique line, an area of the second slit 432 connecting the second space S2 and the third space S3 may be expanded. As the area of the second slit 432 is expanded, an area of a connecting portion of the second space S2 and the third space S3 may be expanded. Since the area of the connecting portion of the second space S2 and the third space S3 may be expanded, vibration between the second space S2 and the third space S3 may be smoothly transmitted. According to an embodiment, as the area of the connecting portion between the second space S2 and the third space S3 is expanded, heat emitted from the electronic components 300 surrounded by the shield can 420 may be smoothly diffused.

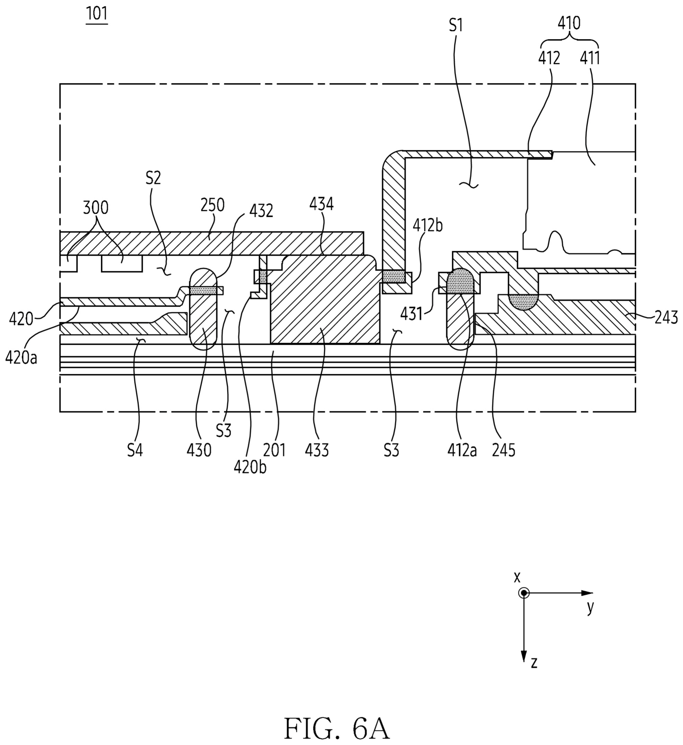

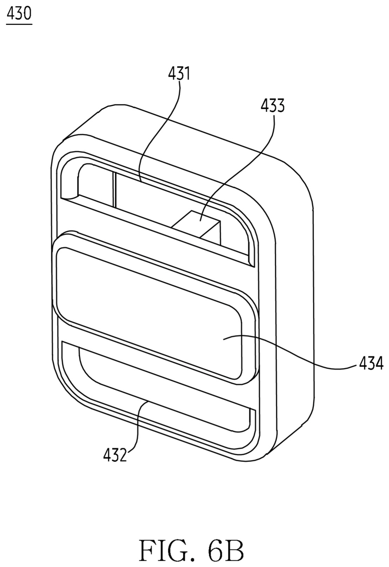

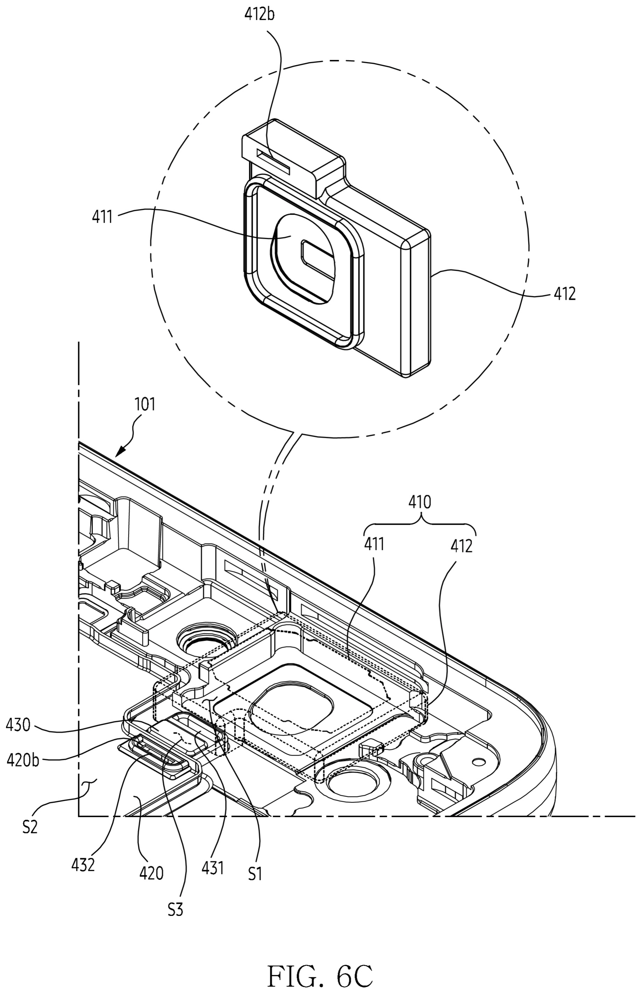

FIG. 6A is a cross-sectional view of an exemplary electronic device 101 cut along line B-B' of FIG. 4A. FIG. 6B illustrates an exemplary connecting structure 430. FIG. 6C is a perspective view of an exemplary speaker module 410, shield can 420, and connecting structure 430.

Referring to FIGS. 6A and 6B, the connecting structure 430 may be inserted into a through hole 245. For example, the through hole 245 may at least partially overlap the speaker module 410 and the shield can 420. For example, a shape of the connecting structure 430 may correspond to a shape of the through hole 245. For example, the connecting structure 430 may include a flexible material (e.g., rubber) to be interference-fitted into the through hole 245, but is not limited thereto. The connecting structure 430 inserted into the through hole 245 may be in contact with a first side 412a of an enclosure 412 that at least partially surrounds a first space S1 and a second side 420a of a shield can 420 that at least partially surrounds a second space S2, respectively. The connecting structure 430 inserted into the through hole 245 may pass through the through hole 245 and be in contact with a display 201. The connecting structure 430 may separate the through hole 245 from a fourth space S4 between the display 201 and a support 243. The supporting structure 430 between a first slit 431 and a second slit 432 may be configured to support the connecting structure 430. The cross-sectional view illustrated in FIG. 6A may be a cross-sectional view of a portion including the supporting structure 433 of FIG. 6C.

Referring to FIGS. 6A and 6C, the connecting structure 430 may include a first slit 431 and a second slit 432. The first slit 431 may be aligned with a first opening 412b of the first side 412a, and the second slit 432 may be aligned with a second opening 420b of the second side 420a. The first space S1 may be connected to a third space S3 through the first slit 431, and the second space S2 may be connected to the third space S3 through the second slit 432. The third space S3 inside the connecting structure 430 may connect the first space S1 and the second space S2.

According to an embodiment, a portion of the connecting structure 430 may be compressed by an enclosure 412 and a shield can 420. As the connecting structure 430 is compressed, in a region other than the first opening 412b and the first slit 431 and the second opening 420b and the second slit 432, a portion between the enclosure 412 and the connecting structure 430, and a portion between the shield can 420 and the connecting structure 430 may be sealed. Through the sealed structure, the first space S1 and the third space S3 may be connected only through the first opening 412b and the first slit 431 that are aligned with each other, and the second space S2 and the third space S3 may be connected only through the second opening 420b and the second slit 432 that are aligned with each other. The connecting structure 430 inserted into the through hole 245 may expand a resonance space for resonance of an audio signal by connecting the first space S1 to the second space S2. Since the connecting structure 430 passes through the through hole 245 and is in contact with the display 201, the third space S3 may be separated from a fourth space S4 between the display 201 and the support 243.

According to an embodiment, the connecting structure 430 may include a protruding portion 434. The protruding portion 434 may protrude from a side of the connecting structure 430 facing the speaker module 410 and the shield can 420. For example, between the first slit 431 and the second slit 432, the protruding portion 434 may be formed by protruding toward the PCB 250. When the connecting structure 430 is inserted into the through hole 245, the protruding portion 434 may be in contact with the PCB 250. A portion of the PCB 250 may be exposed to the outside of the shield can 420. For example, the shield can 420 may cover some regions of the PCB 250, and a portion of the PCB 250 not covered by the shield can 420 may be positioned outside the shield can 420. The protruding portion 434 may support the portion of the PCB 250 positioned outside the shield can 420. For example, between the shield can 420 and the enclosure 412, the protruding portion 434 may be in contact with a portion of the PCB 250, but is not limited thereto. The connecting structure 430 inserted into the through hole 245 may have a shape corresponding to other structures to expand a resonance space for resonance of an audio signal between the speaker module 410 and the shield can 420. For example, the overall shape of the connecting structure 430 may correspond to a shape of the through hole 245 so as to be insertable into the through hole 245. A shape of a side of the connecting structure 430 facing the speaker module 410 and the shield can 420 may correspond to a shape of the speaker module 410 and the shield can 420 in contact with the connecting structure 430. The protruding portion 434 may correspond to an area of the PCB 250 exposed to the outside of the shield can 420. According to an embodiment, the connecting structure 430 may be configured to stably connect the first space S1 to the second space S2 by being firmly inserted into the through hole 245, thereby expanding a resonance space for resonance of an audio signal.

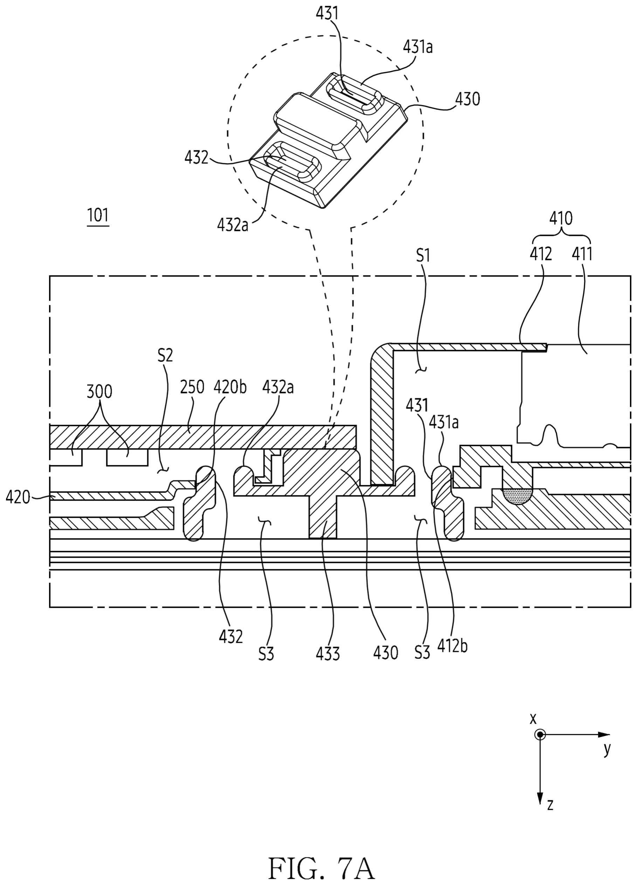

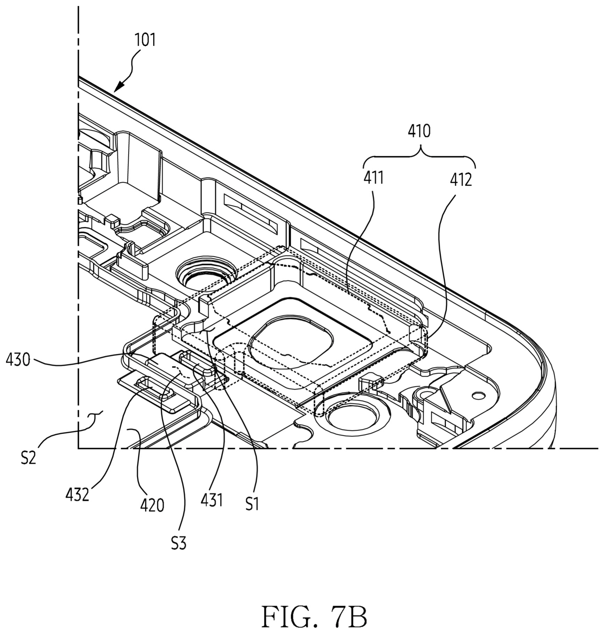

FIG. 7A is a cross-sectional view of an exemplary electronic device 101 cut along line B-B' of FIG. 4A. FIG. 7B is a perspective view of an exemplary speaker module 410, shield can 420, and connecting structure 430.

Referring to FIG. 7A, a portion of the connecting structure 430 may be inserted into the speaker module 410 and the shield can 420. For example, the connecting structure 430 may include a first insertion portion 431a surrounding a periphery of a first slit 431, and a second insertion portion 432a surrounding a periphery of the second slit 432. The first insertion portion 431a may protrude below (e.g., in the -z direction) the first slit 431, and the second insertion portion 432a may protrude below (e.g., in the -z direction) the second slit 432. The first insertion portion 431a may be inserted into a first opening 412b of an enclosure 412, and the second insertion portion 432a may be inserted into a second opening 420b of the shield can 420. The first insertion portion 431a may be inserted into the first opening 412b to seal between a first space S1 and a third space S3, and the second insertion portion 432a may be inserted into the second opening 420b to seal between a second space S2 and the third space S3. For example, the first insertion portion 431a may be interference-fitted into the first opening 412b, and the second insertion portion 432a may be interference-fitted into the second opening 420b, but is not limited thereto. Referring to FIG. 7B, the first slit 431 may be positioned on a portion of the connecting structure 430 overlapped with the speaker module 410, and the second slit 432 may be positioned on another portion of the connecting structure 430 overlapped with the shield can 420. The first space S1 may be connected to the third space S3 through the first slit 431, and the second space S2 may be connected to the third space S3 through the second slit 432.

For example, in the electronic device 101 illustrated in FIGS. 5A and 6A, the first space S1, the second space S2, and the third space S3 may be connected to each other as the first slit 431 and the second slit 432 are overlapped to be aligned with the first opening 412b and the second opening 420b, respectively. On the other hand, in the electronic device 101 illustrated in FIG. 7A, the first space S1, the second space S2, and the third space S3 may be connected to each other as the first insertion portion 431a is inserted into the first opening 412b and the second insertion portion 432a is inserted into the second opening 420b.

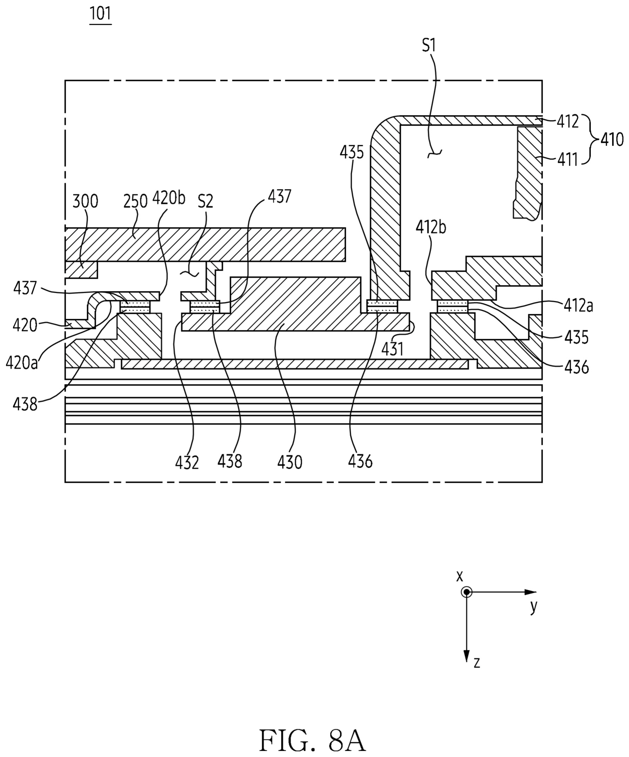

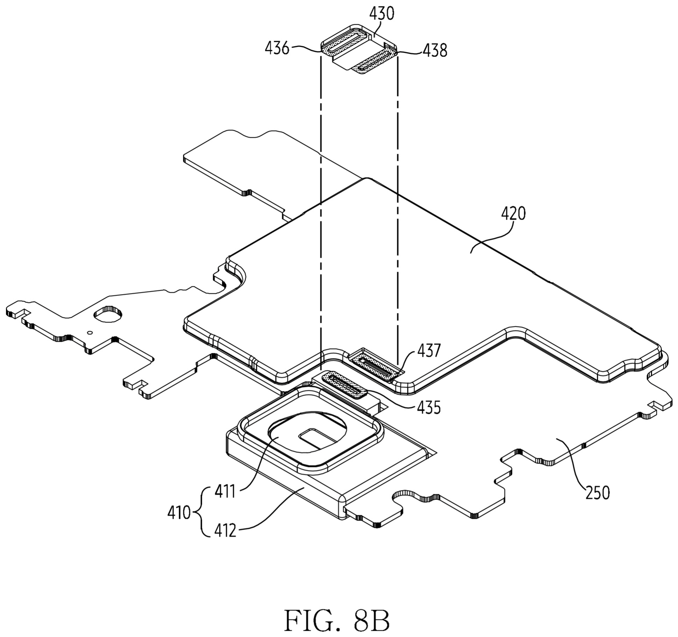

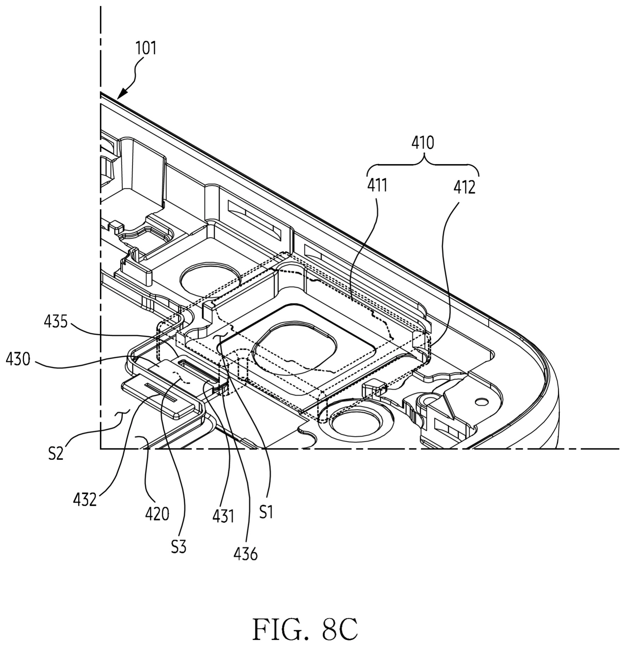

FIG. 8A is a cross-sectional view of an exemplary electronic device 101 cut along line B-B' of FIG. 4A. FIG. 8B illustrates an exemplary connecting structure 430. FIG. 8C is a perspective view of an exemplary speaker module 410, shield can 420, and connecting structure 430.

Referring to FIGS. 8A, 8B, and 8C, the electronic device 101 may include magnets 435, 436, 437, and 438 for attaching the connecting structure 430 to the enclosure 412 and the shield can 420. The magnets 435, 436, 437, and 438 may be configured to attach the connecting structure 430 to the enclosure 412 and the shield can 420 using magnetic force.

According to an embodiment, the connecting structure 430 may include a first magnet 435, a second magnet 436, a third magnet 437, and a fourth magnet 438. The first magnet 435 may surround a periphery of a first opening 412b formed on a first side 412a of the enclosure 412. For example, the first magnet 435 may be attached on the first side 412a. The second magnet 436 may surround a first slit 431 aligned with the first opening 412b. For example, the second magnet 436 may be attached on a side of the connecting structure 430 facing the enclosure 412. The second magnet 436 may be coupled with the first magnet 435. The third magnet 437 may surround a periphery of a second opening 420b formed on a second side 420a of the shield can 420. For example, the third magnet 437 may be attached on (e.g., in the +z direction) the second side 420a. The fourth magnet 438 may surround the second slit 432 aligned with the second opening 420b. For example, the fourth magnet 438 may be attached on a side of the connecting structure 430 facing the enclosure 412. The fourth magnet 438 may be coupled with the third magnet 437.

According to an embodiment, the magnets 435, 436, 437, and 438 may be coupled using different polarities. The first magnet 435 and the second magnet 436 may have different polarities. The first magnet 435 may be an N-pole and the second magnet 436 may be an S-pole. The third magnet 437 and the fourth magnet 438 may have different polarities. For example, the third magnet 437 may be an N pole, and the fourth magnet 438 may be an S pole. However, it is not limited thereto.

According to an embodiment, the connecting structure 430 may be coupled to the speaker module 410 and the shield can 420 by using the magnetic force of the magnets 435, 436, 437, and 438 in addition to a physical fastening structure. When using the magnetic force of the magnets 435, 436, 437, and 438, the first space S1, the second space S2, and the third space S3 may be firmly sealed, and convenience of assembly may be implemented.

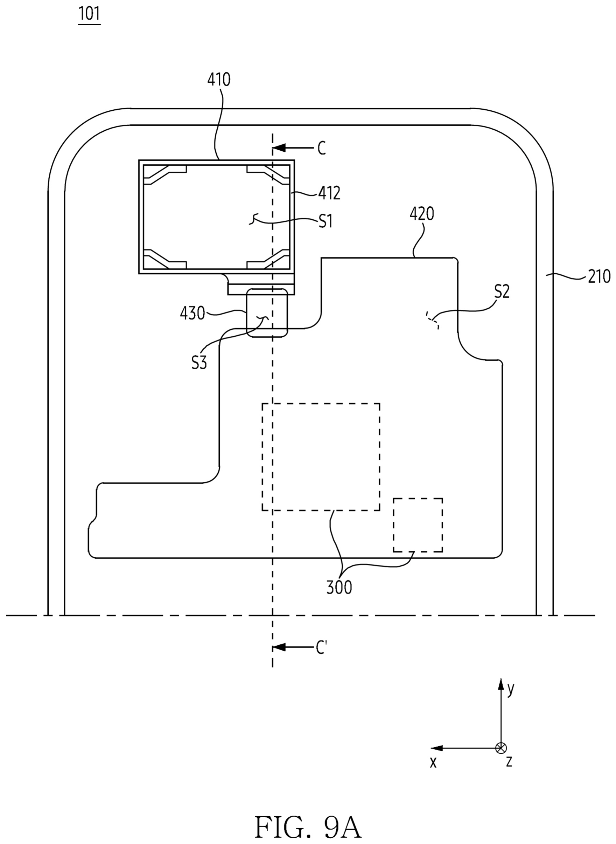

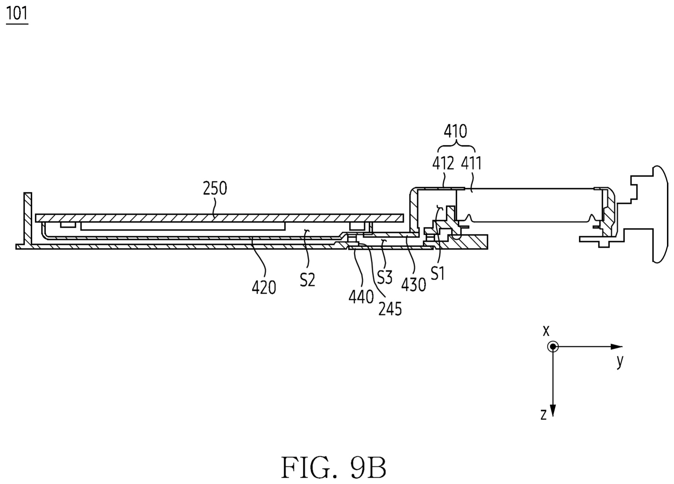

FIG. 9A illustrates a portion of an exemplary electronic device 101. FIG. 9B is a cross-sectional view of the exemplary electronic device 101 cut along line C-C' of FIG. 9A.

Referring to FIG. 9A, the electronic device 101 may include a resonance space for resonance of an audio signal. The audio signal may have a resonance frequency based on a volume of the resonance space. The resonance space may include a first space S1 surrounded by an enclosure 412, a second space S2 surrounded by a shield can 420, and a third space S3 formed by a connecting structure 430.

For example, in a case of the electronic device 101 not including the connecting structure 430, the resonance space may include the first space S1 surrounded by the enclosure 412. In order to implement various functions of the electronic device 101, a plurality of electronic components may be disposed in a housing (e.g., the housing 210 of FIG. 2A). Since a size of the housing 210 may be limited in accordance with a trend toward miniaturization of the electronic device 101, an arrangement space for the plurality of electronic components 300 disposed in the housing 210 may be limited. The speaker module 410 may have a small size in accordance with the limited size of the housing 210. Since the size of the speaker module 410 is limited, the first space S1 surrounded by the enclosure 412 may be insufficient to provide a resonance space for an audio signal on a relatively low audio frequency band. When a resonance space is provided only by the first space S1, a quality of a relatively low audio signal may be deteriorated, and it may be difficult to provide a sufficient volume.

Referring to FIG. 9B, the electronic device 101 according to an embodiment may expand a resonance space through the connecting structure 430. According to an embodiment, the connecting structure 430 may connect a second space S2, which is a space surrounded by the shield can 420 and the PCB 250, to a first space S1, which is a space between the enclosure 412 and the speaker 411, to connect the first space S1 and the second space S2. The connecting structure 430 may be disposed below (e.g., in the -z direction) the through hole 245, or may overlap the through hole 245. The connecting structure 430 may form a third space S3 connecting the first space S1 and the second space S2 through the through hole 245. For example, when the connecting structure 430 is positioned below the through hole 245, the third space S3 may be shielded by the cover sheet 440.

According to an embodiment, as a resonance space is expanded from the first space S1, through the connecting structure 430, to the first space S1, the second space S2, and the third space S3, a resonance space for a relatively low audio signal may be secured. For example, a volume of the first space S1 may be about 0.08cc, a volume of the second space S2 may be about 0.35cc, and a volume of the third space S3 may be about 0.01cc. In a case of the electronic device 101 not including the connecting structure 430, since the resonance space includes only the first space S1, a volume of the resonance space may be about 0.08 cc. In a case of the electronic device 101 according to an embodiment, since the resonance space includes the first space S1, the second space S2, and the third space S3, a volume of the resonance space may be about 0.44 cc. According to an embodiment, even when a size of the speaker module 410 is not increased, a resonance space of about 5 times or more may be secured by additionally using the second space S2 and the third space S3. The above-described numerical values are exemplary and may vary in accordance with a design or structure of the electronic device 101. For example, a volume of the second space S2 may vary in accordance with the size, type, or number of the electronic components 300 positioned within a space surrounded by the PCB 250 and the shield can 420, or a size of the shield can 420. For example, a volume of the third space S3 may vary in accordance with a size of the through hole 245 or a size of the connecting structure 430. A volume of a resonance space expanded from the first space S1 may vary in accordance with the volume of the second space S2 and the volume of the third space S3, but an expanded resonance space may be provided compared to a case where only the first space S1 is used as the resonance space. As the resonance space is expanded, a quality of an audio signal on a relatively low audio frequency band may be improved.

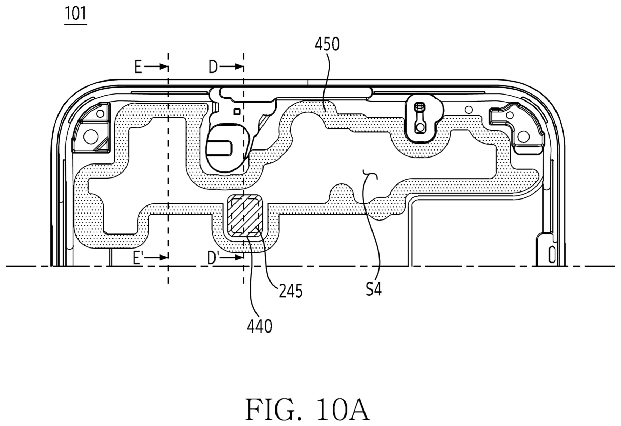

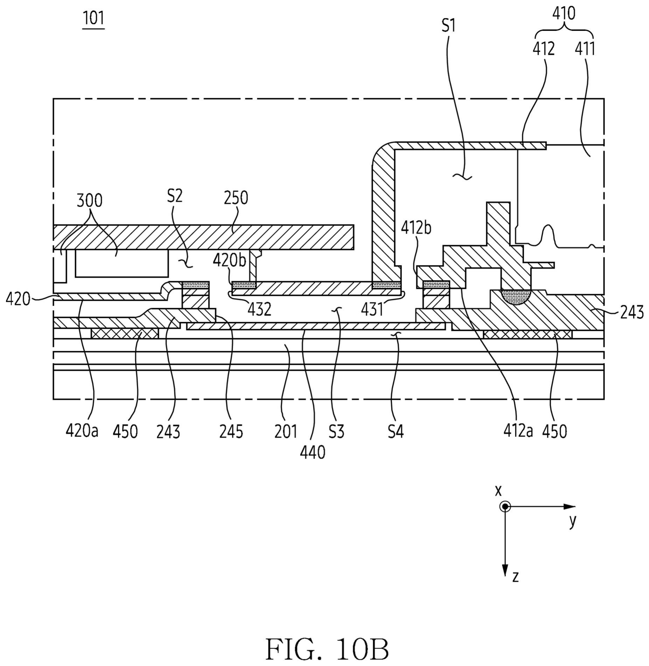

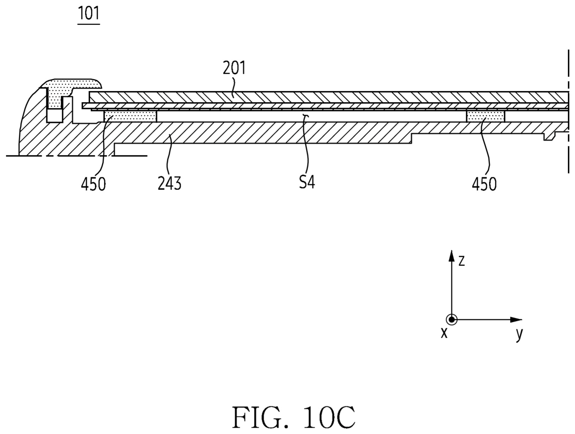

FIG. 10A is a front view of an exemplary electronic device 101 in which a display 201 is omitted. FIG. 10B is a cross-sectional view of the exemplary electronic device 101 cut along line D-D' of FIG. 10A. FIG. 10C is a cross-sectional view of the exemplary electronic device 101 cut along line E-E' of FIG. 10A.

The electronic device 101 according to an embodiment may use a fourth space S4, which is a space between a display (e.g., the display 201 of FIG. 10B) and a support 243, as a resonance space. Referring to FIGS. 10A and 10B, the display 201 may be disposed over (e.g., in the +z direction) the support 243. The support 243 may support the display 201 below (e.g., in the -z direction) the display 201. Between the display 201 and the support 243, an attaching member 450 may be positioned. The attaching member 450 may be configured to attach the display 201 to the support 243. For example, a side of the attaching member 450 may be attached to the display 201, and another side of the attaching member 450 may be attached to the support 243. The attaching member 450 may be disposed to surround some regions of the support 243. For example, the attaching member 450 may include at least one of a pressure sensitive adhesive (PSA), an optically clear adhesive (OCA), and an optical clear resin (OCR), but is not limited thereto. The display 201 may be attached to the support 243 through the attaching member 450.

According to an embodiment, the through hole 245 may be positioned within a region surrounded by the attaching member 450. For example, a portion of the attaching member 450 may extend along the outside of the through hole 245. The region surrounded by the attaching member 450 may be connected to the inside of the through hole 245. Since the attaching member 450 is disposed between the display 201 and the support 243, a gap between the display 201 and the support 243 may be formed within a region surrounded by the attaching member 450 due to a thickness (e.g., a length in the z-axis direction) of the attaching member 450. The gap between the display 201 and the support 243 may be connected to the through hole 245. The gap may be formed between the display 201 and the support 243 by the support 243 surrounding some regions of the support 243. The gap may be referred to as a fourth space S4. A volume of the fourth space S4 may be about 0.08 cc, but is not limited thereto.

Referring to FIG. 10B, the connecting structure 430 may be positioned below (e.g., in the -z direction) the through hole 245. The connecting structure 430 may partially overlap a speaker module 410 and the through hole 245 to connect a first space S1 to the fourth space S4 between the support 243 and the display 201 through the through hole 245. For example, the connecting structure 430 may be in contact with a first side 412a of an enclosure 412 above the first space S1, below the through hole 245. The first space S1 may be connected to a third space S3 formed by the connecting structure 430 and the through hole 245 through a first slit 431 aligned with a first opening 412b. Since the connecting structure 430 at least partially overlaps the through hole 245, the first space S1 may be connected to the fourth space S4 through the third space S3. A cover sheet 440 positioned over the through hole 245 and covering the through hole 245 may have air permeability to connect the third space S3 and the fourth space S4. For example, the cover sheet 440 may be a mesh cover that blocks the inflow of foreign substances and passes a vibration of air generating an audio signal through the through hole 245, but is not limited thereto. The cover sheet 440 may allow a connection between the third space S3 and the fourth space S4 without separating the third space S3 from the fourth space S4. The cover sheet 440 may be omitted as needed.

Referring to FIGS. 10B and 10C, the electronic device 101 according to an embodiment may expand a resonance space for resonance of an audio signal through the connecting structure 430. For example, the resonance space may include a first space (e.g., the first space S1 of FIG. 10B), a second space (e.g., the second space S2 of FIG. 10B), a third space (e.g., the third space S3 of FIG. 10B), and a fourth space (e.g., the fourth space S4 of FIG. 10C). For example, a volume of the first space S1 may be about 0.08cc, a volume of the second space S2 may be about 0.35cc, a volume of the third space S3 may be about 0.01cc, and a volume of the fourth space S4 may be about 0.08cc. In a case of the electronic device 101 not including the connecting structure 430, since the resonance space includes only the first space S1, a volume of the resonance space may be about 0.08 cc. In a case of the electronic device 101 according to an embodiment, since the resonance space includes the first space S1, the second space S2, the third space S3, and the fourth space S4, a volume of the resonance space may be about 0.52 cc. According to an embodiment, a resonance space for resonance of an audio signal may additionally include the fourth space S4. As the resonance space is expanded, a quality of an audio signal on a relatively low audio frequency band may be improved. According to an embodiment, as the gap between the display 201 and the support 243 is used as an additional resonance space, the resonance space may be expanded without an increase in a size of the speaker module 410.

According to an embodiment, an electronic device (e.g., the electronic device 101 of FIG. 2A) may include a housing (e.g., the housing 210 of FIG. 2A), a display (e.g., the display 201 of FIG. 2B), a speaker module (e.g., the speaker module 410 of FIG. 3), a shield can (e.g., the shield can 420 of FIG. 2B), and a connecting structure (e.g., the connecting structure 430 of FIG. 5B). The housing may include a support (e.g., the support 243 of FIG. 2B). The support may include a through hole (e.g., the through hole 245 of FIG. 4B). The display may be positioned in a first direction (e.g., the +z direction in FIG. 2B) with respect to the support. The speaker module may include a speaker (e.g., the speaker 411 of FIG. 3) and an enclosure (e.g., the enclosure 412 of FIG. 3). The speaker may be configured to output an audio signal. The enclosure may surround the speaker. The speaker module may be positioned in a second direction (e.g., the -z direction in FIG. 2B) opposite to the first direction with respect to the support. The shield can may be spaced apart from the speaker module in the second direction with respect to the support. The shield can may cover electronic components (e.g., the electronic components 300 of FIG. 4E) disposed on a printed circuit board (PCB) (e.g., the PCB 250 of FIG. 2B). The connecting structure may be positioned in the second direction with respect to the through hole, to connect a first space (e.g., the first space S1 of FIG. 5A) between the speaker and the enclosure and a second space (e.g., the second space S2 of FIG. 5A) between the PCB and the shield can via the through hole, for resonance of the audio signal. The connecting structure may be in contact with a first side (e.g., the first side 412a of FIG. 5A) of the enclosure that at least partially surrounds the first space and a second side (e.g., the second side 420a of FIG. 5A) of the shield can that at least partially surrounds the second space, respectively. According to an embodiment of the present disclosure, an electronic device may include a connecting structure configured to expand a resonance space for resonance of an audio signal. The connecting structure may be configured to connect a first space for resonance of the audio signal to an additional space (e.g., second space, third space, and/or fourth space). As the space for resonance of an audio signal is expanded, a quality of an audio signal on a relatively low audio frequency band may be improved. As the resonance space is expanded to the first space, the second space, and the third space, the resonance space for resonance of an audio signal may be expanded by using a space inside the electronic device without increasing a size of a speaker module. Since an audio signal may resonate through the expanded first space, second space, and third space, a quality of the audio signal may be improved.

According to an embodiment, the connecting structure may include a first body (e.g., the first body 430a of FIG. 5B) and a second body (e.g., the second body 430b of FIG. 5B). The first body may include a first slit (e.g., the first slit 431 of FIG. 5B) and a second slit (e.g., the second slit 432 of FIG. 5B). The first slit may be aligned with a first opening (e.g., the first opening 412b of FIG. 5A) of the first side. The first slit may connect the first space and an internal space of the connecting structure. The second slit may be aligned with a second opening (e.g., the second opening 420b of FIG. 5A) of the second side. The second slit may connect the second space and an internal space of the connecting structure. The second body may be positioned between the first body and the support along a periphery of the first body. The second body may include an opening (e.g., the opening 430c of FIG. 5B) connected to the first slit and the second slit. The second body may support the first body. According to an embodiment of the present disclosure, the connecting structure may connect the first space and the second space. The connecting structure may be connected to the first space through the first slit and may be connected to the second space through the second slit.

The electronic device according to an embodiment may further include a cover sheet (e.g., the cover sheet 440 of FIG. 5A). The cover sheet may be positioned in the first direction with respect to the through hole. The cover sheet may seal the through hole by covering the through hole. A resonance space for the resonance of the audio signal may include the first space, the second space, and a third space (e.g., the third space S3 of FIG. 5A) between the connecting structure connecting the first space and the second space and the cover sheet. According to an embodiment of the present disclosure, the cover sheet may separate the through hole from a fourth space between the display and the support. The cover sheet may include an airtight material through which air does not flow to separate the through hole from the fourth space. By the cover sheet positioned over the through hole and the connecting structure positioned below the through hole, the third space between the connecting structure and the cover sheet may be formed.

According to an embodiment, the connecting structure may include a supporting structure (e.g., the supporting structure 433 of FIG. 5B). The supporting structure may be in contact with the first body and the cover sheet, respectively. The supporting structure may be positioned within an opening of the second body. According to an embodiment of the present disclosure, the supporting structure may secure a volume of the third space by supporting the connecting structure. For example, the supporting structure may include a tape, but is not limited thereto.

According to an embodiment, the shield can may be tilted with respect to the first body to expand an area of the second opening and the second slit aligned with each other. The shield can may be configured to compress a portion (e.g., the portion 430a-1 of FIG. 5D) of the first body attached to the second side more than another portion (e.g., the other portion 430a-2 of FIG. 5D) of the first body attached to the second side. According to an embodiment of the present disclosure, as the shield can compresses a portion of the first body more than another portion of the first body, so that a cross section of the second slit may form an oblique line. As the cross section of the second slit is formed as an oblique line, an area of the second slit connecting the second space and the third space may be expanded. As the area of the second slit is expanded, an area of a connecting portion between the second space and the third space may be expanded. Since the area of the connecting portion of the second space and the third space may be expanded, a vibration may be smoothly transmitted between the second space and the third space. According to an embodiment, as the area of the connecting portion of the second space and the third space is expanded, heat emitted from the electronic components 300 surrounded by the shield can may be smoothly diffused.

According to an embodiment, the connecting structure may include a first slit and a second slit. The first slit may be aligned with the first opening on the first side. The first slit may connect the first space and an internal space of the connecting structure. The second slit may be aligned with the second opening of the second side. The second slit may connect the second space and an internal space of the connecting structure. The connecting structure may be inserted into the through hole. According to an embodiment of the present disclosure, the connecting structure may be inserted into the through hole to connect the first space to the second space. The connecting structure inserted into the through hole may pass through the through hole and be in contact with the display. The connecting structure may separate the through hole from a fourth space (e.g., the fourth space S4 of FIG. 5A) between the display and the support without a cover sheet.

According to an embodiment, the connecting structure may include a first slit, a second slit, and a protruding portion (e.g., the protruding portion 434 of FIG. 6B). The first slit may be aligned with the first opening of the first side. The first slit may connect the first space and an internal space of the connecting structure. The second slit may be aligned with the second opening of the second side. The second slit may connect the second space and an internal space of the connecting structure. The connecting structure may be inserted into the through hole. The protruding portion may be positioned between the first slit and the second slit. The protruding portion may contact the PCB. According to an embodiment of the present disclosure, the connecting structure may include a protruding portion. The protruding portion may protrude from a side of the connecting structure facing the speaker module and the shield can. The protruding portion may support a portion of the PCB positioned outside the shield can.

According to an embodiment, a first slit, a second slit, a first magnet (e.g., the first magnet 435 of FIG. 8B), a second magnet (e.g., the second magnet 436 of FIG. 8B), a third magnet (e.g., the third magnet 437 of FIG. 8B), and a fourth magnet (e.g., the fourth magnet 438 of FIG. 8B) may be included. The first slit may be aligned with the first opening of the first side. The first slit may connect the first space and an internal space of the connecting structure. The second slit may be aligned with the second opening of the second side. The second slit may connect the second space and an internal space of the connecting structure. The first magnet may surround the first opening. The second magnet may surround the first slit. The second magnet may be coupled with the first magnet. The third magnet may surround the second opening. The fourth magnet may surround the second slit. The fourth magnet may be coupled with the third magnet.

According to an embodiment, a polarity of the first magnet may be different from a polarity of the second magnet. A polarity of the third magnet may be different from a polarity of the fourth magnet. According to an embodiment of the present disclosure, the connecting structure may be coupled to the speaker module and the shield can by using a magnetic force of magnets. When using the magnetic force of the magnets, the sealing of the first space, the second space, and the third space may be firmly performed, and convenience of assembly may be implemented.

According to an embodiment, the connecting structure may at least partially overlap the speaker module and the through hole to connect the first space with a fourth space between the support and the display, via the through hole.

According to an embodiment, the electronic device may further include a cover sheet positioned in the first direction with respect to the through hole. The cover sheet may seal the through hole by covering the through hole. A resonance space for the resonance of the audio signal may include the first space, the second space, a third space between the connecting structure connecting the first space and the second space and the cover sheet, and the fourth space.

According to an embodiment, the electronic device may further include a cover sheet. The cover sheet may be positioned in the first direction with respect to the through hole. The cover sheet may cover the through hole. The cover sheet may have air permeability. According to an embodiment of the present disclosure, the electronic device may use the fourth space, which is a space between the display and the support, as a resonance space.

According to an embodiment, the electronic device may further include an attaching member (e.g., the attaching member 450 of FIG. 10A). The attaching member may surround the fourth space. The attaching member may be configured to attach the display to the support. According to an embodiment of the present disclosure, the through hole may be positioned within a region surrounded by the attaching member. For example, a portion of the attaching member may extend along the outside of the through hole. The region surrounded by the attaching member may be connected to the inside of the through hole. Since the attaching member is disposed between the display and the support, a gap between the display and the support may be formed within the region surrounded by the attaching member, due to a thickness of the attaching member. The gap may be used as a resonance space for resonance of an audio signal. According to an embodiment, the resonance space may be expanded by using the gap between the display and the support as the resonance space for resonance of an audio signal.

According to an embodiment, the speaker may include a diaphragm. The diaphragm may be configured to output the audio signal by vibrating based on an electrical signal. The first space may be a space between the enclosure and a side (e.g., the other side 411a-1 of FIG. 3) of the diaphragm (e.g., the diaphragm 411a of FIG. 3) opposite to another side facing the display. According to an embodiment of the present disclosure, the first space may be referred to as a rear space, which is a space between the enclosure and another side (e.g., rear side) of the diaphragm.

According to an embodiment, the electronic device may further include a cover sheet. The cover sheet may be positioned in the first direction with respect to the through hole. The cover sheet may cover the through hole. The cover sheet may be configured to shield electromagnetic waves emitted from the electronic components between the PCB and the shield can. According to an embodiment of the present disclosure, a second opening may be formed on the second side of the shield can to connect the second space to the third space. Through the second opening, electromagnetic waves of electronic components surrounded by the PCB and the shield can may be emitted to the outside of the shield can. Through the second opening, an RF signal may be introduced into the electronic components. The cover sheet may include a material for shielding electromagnetic waves.

According to an embodiment, the connecting structure may be configured to be compressed by the support, the speaker module, and the shield can. According to an embodiment of the present disclosure, when the support, the speaker module, and the shield can are fastened to each other, the connecting structure may be compressed by the support, the speaker module, and the shield can. As the connecting structure connecting the first space and the second space is compressed, sealing between spaces may be performed firmly.

According to an embodiment, an electronic device (e.g., the electronic device 101 of FIG. 2A) may include a housing (e.g., the housing 210 of FIG. 2A), a speaker module (e.g., the speaker module 410 of FIG. 3), a shield can (e.g., the shield can 420 of FIG. 2B), and a connecting structure (e.g., the connecting structure 430 of FIG. 5B). The housing may include a support (e.g., the support 243 of FIG. 2B). The support may include a through hole (e.g., the through hole 245 of FIG. 4B). The speaker module may include a speaker (e.g., the speaker 411 of FIG. 3) and an enclosure (e.g., the enclosure 412 of FIG. 3). The speaker may be configured to output an audio signal. The enclosure may surround the speaker. The speaker module may be positioned in a first direction (e.g., the -z direction in FIG. 2B) with respect to the support. The shield can may be spaced apart from the speaker module in the first direction with respect to the support. The shield can may cover electronic components (e.g., the electronic components 300 of FIG. 4E) disposed on a printed circuit board (PCB). The connecting structure may be positioned in a first direction with respect to the through hole to connect a first space (e.g., the first space S1 of FIG. 5A) between the speaker and the enclosure and a second space (e.g., the second space S2 of FIG. 5A) between the PCB and the shield can via the through hole, for resonance of the audio signal. The connecting structure may be in contact with a first side (e.g., the first side 412a of FIG. 5A) of the enclosure that at least partially surrounds the first space and a second side (e.g., the second side 420a of FIG. 5A) of the shield can that at least partially surrounds the second space. The connecting structure may include a first slit (e.g., the first slit 431 of FIG. 5B) and a second slit (e.g., the second slit 432 of FIG. 5B). The first slit may be aligned with a first opening (e.g., the first opening 412b of FIG. 5A) of the first side. The first slit may connect the first space and an internal space of the connecting structure. The second slit may be aligned with a second opening (e.g., the second opening 420b of FIG. 5A) of the second side. The second slit may connect the second space and an internal space of the connecting structure.

According to an embodiment, the electronic device may further include a cover sheet (e.g., the cover sheet 440 of FIG. 5A). The cover sheet may be positioned in a second direction opposite to the first direction with respect to the through hole. The cover sheet may seal the through hole by covering the through hole. A resonance space for the resonance of the audio signal may include the first space, the second space, and a third space (e.g., the third space S3 of FIG. 5A) between the connecting structure connecting the first space and the second space and the cover sheet.

According to an embodiment, the connecting structure may be inserted into the through hole.

According to an embodiment, the connecting structure may be configured to be compressed by the support, the speaker module, and the shield can.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including a support including a through hole;
a display positioned in a first direction with respect to the support;
a speaker module, positioned in a second direction opposite to the first direction with respect to the support, the speaker module including:
a speaker configured to output an audio signal, and
an enclosure enclosing the speaker,
a shield can, spaced apart from the speaker module in the second direction, covering electronic components disposed on a printed circuit board (PCB); and
a connecting structure, positioned in the second direction with respect to the through hole, in contact with a first side of the enclosure at least partially surrounding a first space between the speaker and the enclosure and a second side of the shield can at least partially surrounding a second space between the PCB and the shield can, respectively, to connect the first space and the second space via the through hole.

2. The electronic device of claim 1,
wherein the connecting structure includes:
a first body including a first slit, aligned with a first opening of the first side, connecting the first space and an internal space of the connecting structure, and a second slit, aligned with a second opening of the second side, connecting the second space and the internal space of the connecting structure,
a second body, positioned along a periphery of the first body between the first body and the support, supporting the first body, and including an opening connected to the first and second slits.

3. The electronic device of claim 1 or 2, further comprising a cover sheet, positioned in the first direction with respect to the through hole, sealing the through hole by covering the through hole,
wherein a resonance space for the resonance of the audio signal includes the first space, the second space, and a third space between the connecting structure connecting the first and second spaces and the cover sheet.

4. The electronic device of claim 3,
wherein the connecting structure includes a supporting structure, in the opening of the second body, in contact with the first body and the cover sheet, respectively.

5. The electronic device of any one of claims 2 to 4,
wherein the shield can is configured to compress a portion of the first body attached to the second side more than another portion of the first body attached to the second side, by tilting with respect to the first body to expand an area of the second opening and the second slit aligned with each other.

6. The electronic device of any one of claims 1 to 5,
wherein the connecting structure includes:
a first slit, aligned with a first opening of the first side, connecting the first space and an internal space of the connecting structure, and
a second slit, aligned with a second opening of the second side, connecting the second space and the internal space of the connecting structure, and
wherein the connecting structure is inserted into the through hole.

7. The electronic device of any one of claims 1 to 6,
wherein the connecting structure includes:
a first slit, aligned with a first opening of the first side, connecting the first space and an internal space of the connecting structure,
a second slit, aligned with a second opening of the second side, connecting the second space and the internal space of the connecting structure, and
a protruding portion between the first and second slits,
wherein the protruding portion is in contact with the PCB.

8. The electronic device of any one of claims 1 to 7,
wherein the connecting structure includes:
a first slit, aligned with a first opening of the first side, connecting the first space and an internal space of the connecting structure,
a second slit, aligned with a second opening of the second side, connecting the second space and the internal space of the connecting structure,
a first magnet surrounding the first opening,
a second magnet, surrounding the first slit, coupled with the first magnet,
a third magnet surrounding the second opening, and
a fourth magnet, surrounding the second slit, coupled with the third magnet.

9. The electronic device of claim 8,
wherein a polarity of the first magnet is different from a polarity of the second magnet, and
wherein a polarity of the third magnet is different from a polarity of the fourth magnet.

10. The electronic device of any one of claims 1 to 9,
wherein the connecting structure at least partially overlaps the speaker module and the through hole to connect the first space and a fourth space between the support and the display, via the through hole.

11. The electronic device of claim 10, further comprising a cover sheet, positioned in the first direction with respect to the through hole, sealing the through hole by covering the through hole,
wherein a resonance space for the resonance of the audio signal includes the first space, the second space, a third space between the connecting structure connecting the first and second spaces and the cover sheet, and the fourth space.

12. The electronic device of claim 10 or 11, further comprising a cover sheet, positioned in the first direction with respect to the through hole, covering the through hole,
wherein the cover sheet has air permeability.

13. The electronic device of any one of claims 10 to 12, further comprising an attaching member, surrounding the fourth space, configured to attach the display to the support.

14. The electronic device of any one of claims 1 to 13,
wherein the speaker includes a diaphragm configured to output the audio signal by vibrating based on an electrical signal, and
wherein the first space is a space between a side of the diaphragm opposite to another side facing the display and the enclosure.

15. The electronic device of any one of claims 1 to 14, further comprising a cover sheet, positioned in the first direction with respect to the through hole, covering the through hole,
wherein the cover sheet is configured to shield electromagnetic waves emitted from the electronic components between the PCB and the shield can.
